# EUROPÄISCHE PATENTSCHRIFT

(11) **EP 3 055 157 B1**
(45) Veröffentlichungstag und Bekanntmachung des Hinweises auf die Patenterteilung: **17.07.2019**
(21) Anmeldenummer: 14761654.4
(22) Anmeldetag: 10.09.2014
(51) Int. Cl.: B60K 20/04, F16H 59/02, F16H 59/10, F16H 61/22, F16H 61/36

(54) **BEFESTIGUNGSEINRICHTUNG, WÄHLHEBELGEHÄUSE, KRAFTÜBERTRAGUNGSELEMENT, SCHALTVORRICHTUNG UND VERFAHREN ZUM BEFESTIGEN EINER SCHALTVORRICHTUNG**
FASTENING DEVICE, SELECTOR LEVEL HOUSING, FORCE TRANSMISSION ELEMENT, SWITCHING DEVICE AND METHOD FOR FASTENING A SWITCHING DEVICE
DISPOSITIF DE FIXATION, BOÎTIER DE LEVIER DE SÉLECTION, ÉLÉMENT DE TRANSMISSION DE FORCES, DISPOSITIF DE COMMUTATION ET PROCÉDÉ DE FIXATION D'UN DISPOSITIF DE COMMUTATION

(30) Priorität: 10.10.2013 DE 102013220409
(43) Veröffentlichungstag der Anmeldung: 17.08.2016
(73) Patentinhaber: ZF Friedrichshafen AG, 88046 Friedrichshafen (DE)
(72) Erfinder: SPRATTE, Joachim, 49090 Osnabrueck (DE); SALUM, Andreas, 37619 Bodenwerder (DE)
(86) Internationale Anmeldenummer: PCT/EP2014/069244
(87) Internationale Veröffentlichungsnummer: WO 2015/051962

(56) Entgegenhaltungen:
- EP-A2- 0 667 470
- EP-A2- 2 453 148
- DE-A1- 2 037 310

## Beschreibung

Die vorliegende Erfindung betrifft eine Befestigungseinrichtung für eine Wählhebelvorrichtung für eine Kraftfahrzeuggetriebeschaltvorrichtung, ein Wählhebelgehäuse für eine solche Wählhebelvorrichtung, ein Kraftübertragungselement für eine solche Wählhebelvorrichtung, eine Schaltvorrichtung für ein Kraftfahrzeuggetriebe sowie ein Verfahren zum Befestigen einer Schaltvorrichtung an ein Kraftfahrzeugbauteil.

Eine Wählhebelvorrichtung für eine Kraftfahrzeuggetriebevorrichtung umfasst üblicherweise einen um eine Wähl- und/oder Schaltachse schwenkbaren Wähl- bzw. Schalthebel, mittels welchem eine von einem Kraftfahrzeugführer ausgewählte Fahrstufe an ein Kraftfahrzeuggetriebe übermittelt wird. Der Wählhebel ist dabei in einer oder mehreren Schaltgassen zur Auswahl einer Fahrstufe bewegbar. Dazu ist der Wählhebel bspw. über ein Kugelgelenk oder zwei über Kreuz stehende Achsen in einem der Wählhebelvorrichtung zugeordneten Wählhebelgehäuse gelagert.

Zur Übertragung der mit dem Wählhebel ausgewählten Fahrstufe ist es üblich, zwischen dem Wählhebel und der Kraftfahrzeuggetriebevorrichtung, welches ein Automatikgetriebe sein kann, mechanische Elemente anzuordnen, um das der Fahrstufe (P, N, R, D, S) entsprechende Schaltprogramm im Automatikgetriebe zu schalten. Als mechanische Elemente werden für eine solche Kraftübertragungseinrichtung üblicherweise ein Seilzug, ein Bowdenzug oder ein mechanisches Gestänge verwendet. Die Kraftübertragungseinrichtung kann unmittelbar an einem freien Ende des Wählhebels oder an einem freien Ende eines zwischen der Kraftübertragungseinrichtung und dem freien Wählhebelende angeordneten Kraftübertragungselementes angebunden sein.

Eine solche Wählhebelvorrichtung wird üblicherweise über eine Befestigungseinrichtung an einem Kraftfahrzeugbauteil, beispielsweise einem Karosseriebauteil eines Kraftfahrzeuges wie ein Kraftfahrzeugbodenblech, befestigt. Zur Abdichtung eines Kraftfahrzeuginnenraumes gegenüber einem mittels des Bodenblechs abgetrennten Außenraum des Kraftfahrzeuges wird vorbekanntermaßen ein Dichtmittel zwischen dem Kraftfahrzeugbauteil und der Befestigungseinrichtung verwendet.

Eine Schaltvorrichtung umfassend eine vorbeschriebene Wählhebelvorrichtung, welche über eine Befestigungseinrichtung an ein Kraftfahrzeugbauteil befestigbar ist, ist beispielsweise aus der Druckschrift EP 0 667 470 A2 bekannt. Die Befestigungseinrichtung sowie das Wählhebelgehäuse sind aus einem kunststoffhaltigen Material ausgeformt. Die Kraftübertragungseinrichtung ist durch eine Seilzugeinrichtung verwirklicht, die eine Seilzug-Seele, eine die Seilzug-Seele umhüllende Seilzughülle sowie ein mit der Seilzughülle in einem Endabschnitt der Seilzugeinrichtung verbundenes Seilzug-Widerlager umfasst, wobei das Seilzug-Widerlager an einem stirnseitigen Ende der Befestigungseinrichtung befestigt ist, um eine Relativbewegung der Seilzug-Seele gegenüber der Seilzughülle zu ermöglichen. Die Seilzug-Seele ist dabei mit ihrem anderen Ende an einem Betätiger der Kraftfahrzeuggetriebevorrichtung befestigt, um eine ausgewählte Fahrstufe an den Betätiger zu übermitteln. Dazu ist die Seilzughülle gleichfalls mittels eines Seilzug-Widerlagers an einem Gehäuse der Kraftfahrzeuggetriebevorrichtung befestigt. Die Anbindung der Seilzughülle mit dem einen Ende an dem Gehäuse der Kraftfahrzeuggetriebevorrichtung und mit dem anderen Ende an der Befestigungseinrichtung ermöglicht ein Durchkoppeln von Aggregatgeräuschen vom Motorraum in den Fahrgastraum, welche von einem Kraftfahrzeugführer als unangenehm empfunden werden. Zwar ist es üblich, solche Störgeräusche über ein in der Kraftübertragungseinrichtung angeordnetes Bedämpfungselement zu bedämpfen, jedoch werden die Störgeräusche durch die Ausgestaltung der Befestigungseinrichtung sowie des Wählhebelgehäuses der Wählhebelvorrichtung aus einem kunststoffhaltigen Material wiederum verstärkt, da diese Bauteile als Membran wirken.

Die Druckschrift DE2037310 A1 offenbart eine Anordnung eines Getriebeschalthebels bei Kraftfahzeugen mit kippbarem Fahrerhaus, aufweisend alle Merkmale des Oberbegriffs des Anspruchs 1.

Mit der vorliegenden Erfindung soll nach einem ersten Aspekt eine verbesserte Befestigungseinrichtung für eine Wählhebelvorrichtung, insbesondere für eine Schaltvorrichtung eines Kraftfahrzeuggetriebes wie beispielsweise eines Automaten oder Automatikgetriebes bereitgestellt werden. Nach einem weiteren Aspekt der vorliegenden Erfindung wird ein verbessertes Kraftübertragungselement für eine solche Wählhebelvorrichtung sowie nach einem weiteren Aspekt der vorliegenden Erfindung ein verbessertes Wählhebelgehäuse für eine solche Wählhebelvorrichtung vorgeschlagen. Gemäß einem weiteren Aspekt der vorliegenden Erfindung wird eine verbesserte Schaltvorrichtung für ein Kraftfahrzeuggetriebe, insbesondere für einen Automaten oder ein Automatikgetriebe, sowie ein Verfahren zum Befestigen einer Schaltvorrichtung an ein Kraftfahrzeugbauteil vorgeschlagen. Insbesondere wird mit den vorgenannten Aspekten der vorliegenden Erfindung eine Reduzierung der von dem Motorraum in den Kraftfahrzeuginnenraum durchgekoppelten Störgeräusche erreicht.

Die den ersten Aspekt der vorliegenden Erfindung betreffende Befestigungseinrichtung mit den Merkmalen des Patentanspruchs 1 umfasst einen Durchlass zur Aufnahme der Wählhebelvorrichtung. Der Durchlass ist vorzugsweise in seinen Ausmaßen derart gewählt, dass ein freies Ende der Wählhebelvorrichtung, insbesondere eines Wählhebelgehäuses der Wählhebelvorrichtung, von dem Durchlass aufgenommen werden kann. Das freie Ende der Wählhebelvorrichtung bzw. des Wählhebelgehäuses korrespondiert vorzugsweise zu einem Endabschnitt der Wählhebelvorrichtung bzw. des Wählhebelgehäuses, welches dem Endabschnitt der Wählhebelvorrichtung bzw. des Wählhebelgehäuses abgewandt ist, durch welches ein von der Wählhebelvorrichtung gelagerter bzw. von dem Wählhebelgehäuse aufgenommener Wählhebel durchragt wird. Vorzugsweise ist die Wählhebelvorrichtung mittels einer Klemm-, Rast- oder Schraubverbindung an der Befestigungseinrichtung befestigbar, wobei die Befestigungseinrichtung sowie die Wählhebelvorrichtung entsprechende bzw. korrespondierende Befestigungselemente aufweisen können. Da es sich hier um übliche Befestigungsmaßnahmen zur Befestigung zweier Komponenten handelt, wird im Folgenden nicht näher darauf eingegangen.

Der Durchlass ist wenigstens teilweise von einem Anlageflächenabschnitt zur Anlage an ein Anlageelement umgeben. Vorzugsweise wird der Durchlass wenigstens teilweise von einem dem Anlagenflächenabschnitt zugeordneten Rand begrenzt. Der Anlageflächenabschnitt ist zur Anlage an ein Kraftfahrzeug- bzw. an ein Karosseriebauteil eines Kraftfahrzeuges geeignet. Beispielsweise kann es sich bei dem Anlageelement um ein Bodenblech eines Kraftfahrzeuges handeln. Der Anlageflächenabschnitt kann vorzugsweise eben, gewölbt oder gekrümmt ausgestaltet sein. Der Anlageflächenabschnitt kann weiter bevorzugt jede denkbare, an die Form des korrespondierenden Anlageelements angepasste Form aufweisen. Mittels des unterschiedlich ausgestaltbaren Anlageflächenabschnitts kann kraftfahrzeugspezifisch eine Befestigungseinrichtung für unterschiedliche Kraftfahrzeuge bereitgestellt werden, die ein unterschiedlich ausgestaltetes Anlageelement aufweisen, an denen die Befestigungseinrichtung mit der Wählhebelvorrichtung anzuordnen oder zu befestigen ist.

Weiterhin ist in dem Anlageflächenabschnitt eine Dichtmittelaufnahme angeordnet.

Die Dichtmittelaufnahme ist vorzugsweise dergestalt, dass ein Dichtmittel zwischen dem Anlageelement und der Wählhebelvorrichtungsaufnahme bzw. der Befestigungseinrichtung zur Abdichtung eines Kraftfahrzeuginnenraums gegenüber einem von dem Anlageelement abgegrenzten äußeren Raum angeordnet werden kann. Als Dichtmittel kommt vorzugsweise ein wenigstens einen vorbekannten Dichtmittelwerkstoff wie beispielsweise ein kautschukhaltiger, polyurethanhaltiger oder Poly-TetraFluor-Ethylenhaltiger Dichtmittelwerkstoff aufweisendes Material in Betracht. Generell kann das Dichtmittel aus einem vorbekannten Material, welches im Allgemeinen zwischen zwei Komponenten zur Abdichtung anordbar oder vorsehbar ist, ausgestaltet sein.

Die Dichtmittelaufnahme ist durch eine in dem Anlageflächenabschnitt ausgebildete Aussparung ausgebildet. Mit anderen Worten ist die Dichtmittelaufnahme insbesondere durch eine in dem Anlageflächenabschnitt ausgesparte als Nut ausgebildete Ausnehmung vorgesehen, in welche das Dichtmittel einlegbar bzw. einspritzbar ist. Die Dichtmittelaufnahme kann vorzugsweise wenigstens eine entlang der Dichtmittelaufnahme verlaufende Rippe oder weitere Vertiefung aufweisen. Dadurch wird eine Oberfläche der Dichtmittelaufnahme vergrößert, wodurch eine bessere Haftbarkeit des Dichtmittels in der Dichtmittelaufnahme erreicht werden kann.

Die vorgeschlagene Befestigungseinrichtung umfasst ferner eine Halterung zum Halten eines Abschnitts einer Kraftübertragungseinrichtung, mittels welcher die Wählhebelvorrichtung mit einer Kraftfahrzeuggetriebevorrichtung schaltwirksam verbindbar ist. Mit anderen Worten ist die Kraftübertragungseinrichtung geeignet, eine über die Wählhebelvorrichtung ausgewählte Fahrstufe an die Kraftfahrzeuggetriebevorrichtung zum Einlegen der ausgewählten Fahrstufe in der Kraftfahrzeuggetriebevorrichtung zu übermitteln. Bei der auswählbaren Fahrstufe handelt es sich vorzugsweise um eine oder mehrere Fahrstufen ausgewählt aus wenigstens einer Vorwärtsfahrstufe D, einer Rückwärtsfahrstufe R, einer Neutralstellung N und einer Parksperrenstellung P. Weitere Fahrstufen sind durchaus denkbar. So kann bspw. die Wählhebelvorrichtung als shift-by-wire ausgestaltet sein, wobei wenigstens die auswählbaren Fahrstufen D, R und N elektrisch an die Kraftfahrzeuggetriebevorrichtung und die Parksperrenstellung P mechanisch mittels der Kraftübertragungseinrichtung an die Kraftfahrzeuggetriebevorrichtung schaltwirksam übermittelt wird. Die Kraftübertragungseinrichtung ist vorzugsweise eine Seilzugeinrichtung, eine Bowdenzugeinrichtung oder ein mechanisches Gestänge, das in Kraftwirkungsrichtung ein oder mehrere miteinander gekoppelte Stangenelemente umfasst. Üblicherweise weist eine solche zwischen der Wählhebelvorrichtung und der Kraftfahrzeuggetriebevorrichtung angeordnete Kraftübertragungseinrichtung ein das kraftübertragene Element der Kraftübertragungseinrichtung umschließendes Hüllelement zum Schutz oder Isolierung desselbigen auf, wobei das Hüllelement mit einem freien Ende ortsfest an der Befestigungseinrichtung und mit dem anderen freien Ende an der Kraftfahrzeuggetriebevorrichtung fixiert wird. Die Halterung ist insbesondere ausgebildet, einen Abschnitt, insbesondere einen Endabschnitt eines solchen Hüllelementes zu halten. Beispielsweise kann der Endabschnitt des Hüllelements aus einem Seilzug-Widerlager ausgebildet sein, wobei die Halterung vorzugsweise zum Halten des Seilzug-Widerlagers ausgebildet ist. Die Halterung ist auf einer der Dichtmittelaufnahme abgewandten Seite des Anlageflächenabschnitts angeordnet. Dadurch kann in vorteilhafter Weise die Kraftübertragungseinrichtung außerhalb eines zwischen dem Anlageflächenabschnitt und dem Anlageelement liegenden, durch das Dichtmittel definierenden Dichtbereiches zugeführt werden.

Die vorgeschlagene Befestigungseinrichtung zeichnet sich dadurch aus, dass die Dichtmittelaufnahme querschnittlich wenigstens teilweise überlappend mit einem von der Halterung begrenzten Haltebereich zum Halten des Abschnitts der Kraftübertragungseinrichtung angeordnet ist. Mit anderen Worten überlappen sich querschnittlich betrachtet wenigstens teilweise ein parallel zu einer Flächenebene des Anlageflächenabschnitts verlaufender Erstreckungsbereich der Dichtmittelaufnahme und der von der Halterung begrenzte Haltebereich unter Zwischenlage eines Anlageflächenabschnittsbereiches. Ein Haltebereich im Sinne der vorliegenden Erfindung ist ein durch die Außenmaße der Halterung begrenzter Bereich, wobei die Halterung ein oder mehrere Halterungsabschnitte aufweisen kann. Im Fall von wenigstens zwei Halterungsabschnitten erstreckt sich der Haltebereich von einer Außenseite des ersten Halterungsabschnitts zu einer dieser Außenseite abgewandte Außenseite des zweiten Halterungsabschnitts. Mittels der Anordnung der Dichtmittelaufnahme innerhalb der Haltebereichs kann gewährleistet werden, dass eine üblicherweise an einem Kopplungspunkt zwischen der Kraftübertragungseinrichtung und der Befestigungseinrichtung auf die Befestigungseinrichtung übertragene Schwingung gleichzeitig an das Anlageelement übertragbar ist, wodurch das Anlageelement als Tilger für die übertragene Schwingung am Ort der Schwingungsübertragung, welcher zu dem Kopplungspunkt korrespondiert, wirken kann. Es hat sich herausgestellt, dass die das Störgeräusch tragende Schwingung dadurch effektiv reduziert werden kann, wodurch das Störgeräusch gleichfalls minimiert wird.

Vorzugsweise weist die Dichtmittelaufnahme eine geringere Breite als eine parallel dazu verlaufende Breite des Haltebereiches auf, wodurch die Dichtmittelaufnahme entlang der Breitenrichtung innerhalb des Haltebereiches unter Zwischenlage des Anlageflächenabschnitts angeordnet ist. Dadurch kann die gesamte Breite des von der Dichtmittelaufnahme aufnehmbaren Dichtmittels unmittelbar am Kopplungspunkt zur Übertragung der Schwingung an das Anlageelement ausgenutzt werden.

Gemäß einer bevorzugten Ausführungsform der vorliegenden Erfindung kann die Halterung durch wenigstens zwei in Kraftwirkungsrichtung der Kraftübertragungseinrichtung voneinander beabstandete Halterungsabschnitte ausgebildet sein. Dadurch kann einer möglichen Torsion oder Drehung des gehaltenen Abschnitts der Kraftübertragungseinrichtung um eine einzige Halterungsachse zur Erhöhung der Stabilität der Halterung entgegengewirkt werden. Die Halterungsabschnitte sind dabei vorzugsweise dergestalt, dass der gehaltene Abschnitt der Kraftübertragungseinrichtung klemmend gehalten wird. Dazu kann weiter bevorzugt wenigstens ein mit dem Halterungsabschnitt zusammenwirkendes Klemmelement zum Fixieren des Abschnitts der Kraftübertragungseinrichtung an der Halterung vorgesehen sein.

Nach einer weiteren bevorzugten Ausführungsform der vorliegenden Erfindung weist die Befestigungseinrichtung wenigstens einen Kragen auf, der einen Teil des Anlageflächenabschnitts mit der Dichtmittelaufnahme auf einer Kragenseite umfasst oder ausbildet und die Halterung auf einer dazu abgewandten Kragenseite trägt. Mit anderen Worten weist die Befestigungseinrichtung einen Überstand in vorbestimmter Breite, Dicke und Tiefe auf, wobei der Überstand einen Teil des Anlageflächenabschnitts mit der Dichtmittelaufnahme umfasst oder ausbildet. Umfassen im Sinne der vorliegenden Erfindung impliziert bei dieser bevorzugten Ausführungsform insbesondere weitere Elemente, die zum einen den Anlageflächenabschnitt und zum anderen die Dichtmittelaufnahme ausbilden und auf der entsprechenden Kragenseite bzw. Überstandseite anordbar sind. Alternativ dazu kann der Kragen bzw. der Überstand den entsprechenden Teil des Anlageflächenabschnitts sowie die Dichtmittelaufnahme ausbilden, mit anderen Worten einstückig mit diesen ausgebildet sein. Die Halterung kann vorzugsweise über übliche Befestigungsmaßnahmen mit dem Kragen bzw. dem Überstand befestigt sein. Alternativ kann die Halterung in bevorzugter Weise gleichfalls mit dem Kragen bzw. dem Überstand einstückig ausgebildet sein. Durch eine einstückige Ausbildung der Halterung als auch des Anlageflächenabschnitts mit dem Kragen bzw. dem Überstand kann die Befestigungseinrichtung kostengünstig und einfach hergestellt werden.

Vorzugsweise ist die Befestigungseinrichtung wannenförmig ausgebildet, wobei der Durchlass in dem wannenförmigen Abschnitt der Befestigungseinrichtung vorgesehen ist und der Anlageflächenabschnitt von dem wannenförmigen Abschnitt abragt. Der Anlagenflächenabschnitt bildet dabei einen Kragen bzw. einen Überstand aus.

Gemäß einer weiteren bevorzugten Ausführungsform der vorliegenden Erfindung ist die Befestigungseinrichtung aus einer Kunststoff-Hartkomponente und einer Kunststoff-Weichkomponente, insbesondere mittels eines Zweikomponenten-Spritzgussverfahrens ausgeformt, wobei wenigstens die Halterung aus der Kunststoff-Weichkomponente ausgeformt ist. Dadurch wird eine elastische Halterung geschaffen, welche die über den gehaltenen Abschnitt der Kraftübertragungseinrichtung weitergetragene Schwingung am Ort der Halterung dämpfen kann, wodurch die Schwingung am Kopplungspunkt weiter reduziert werden kann.

Gemäß einem weiteren Aspekt der vorliegenden Erfindung wird ein Wählhebelgehäuse für eine wie vorbeschriebene Wählhebelvorrichtung vorgeschlagen, wobei das Wählhebelgehäuse eine erfindungsgemäße Befestigungseinrichtung und ein erstes Wählhebelgehäuseteil und ein zweites Wählhebelgehäuseteil, das mit dem ersten Wählhebelgehäuseteil verbindbar ist, umfasst. Das erste und zweite Wählhebelgehäuseteil sind somit zu einem Wählhebelgehäuse zusammensetzbar. Die Wählhebelgehäuseteile weisen dazu vorzugsweise Befestigungselemente, beispielsweise Klemm-, Rast- oder Schraubverbindungselemente auf. Ferner weist wenigstens eines der ersten und zweiten Wählhebelgehäuseteile Versteifungsrippen auf, welche einen Aufnahmeraum zur Aufnahme eines linear, insbesondere translatorisch beweglichen Kraftübertragungselementes zur Übertragung einer Wählhebelbewegung auf eine mit einer Kraftfahrzeuggetriebevorrichtung verbundene Kraftübertragungseinrichtung von dem übrigen Wählhebelgehäusebereich abgrenzen. Die Kraftübertragungseinrichtung kann beispielsweise eine wie vorbeschriebene sein.

Vorzugsweise ist das Wählhebelgehäuse aus einem kunststoffhaltigen Material mittels eines Spritzgussverfahrens, insbesondere eines Zweikomponenten-Spritzgussverfahrens, hergestellt. Dadurch können die Herstellungskosten reduziert werden.

Das Wählhebelgehäuse der vorliegenden Erfindung zeichnet sich dadurch aus, dass eine Halteeinrichtung zum ortsfesten Halten einer in dem Wählhebelgehäuse in einem Bewegungsweg des Kraftübertragungselementes anordbaren Sperreinrichtung, welche zum Sperren einer linearen Bewegung des Kraftübertragungselementes vorgesehen ist, aufweist, wobei die Halteeinrichtung wenigstens ein Halteelement aufweist, das mit wenigstens einer der Versteifungsrippen verbunden und zur Anlage an der Sperreinrichtung vorgesehen ist. Die Anlage bzw. Kontaktierung des Wählhebelgehäuses an der masseträchtigen Sperreinrichtung über das Halteelement birgt den Vorteil, dass das Wählhebelgehäuse am Anlage- bzw. Kontaktierungsort schwingungsstabil ist, wodurch einer Membraneigenschaft des Wählhebelgehäuses, insbesondere wenn es aus einem kunststoffhaltigen Material ausgeformt ist, entgegengewirkt werden kann.

Gemäß einem bevorzugten Ausführungsbeispiel der vorliegenden Erfindung weist die Haltevorrichtung wenigstens ein zweites Halteelement auf, das dem wenigstens ersten Halteelement gegenüberliegend angeordnet ist, wobei das erste und zweite Halteelement ausgebildet sind, die Sperreinrichtung unter Zwischenlage klemmend zu halten. Damit kann zum einen eine schwingungsfreie Lagerung der Sperreinrichtung in dem Wählhebelgehäuse und zum anderen eine Vergrößerung der Kontaktierungsfläche des Wählhebelgehäuses mit der Sperreinrichtung erreicht werden. Die Masseträgheit der Sperreinrichtung wirkt sich dementsprechend schwingungsreduzierend auf das Wählgehäuse aus.

Das wenigstens eine Halteelement ist vorzugsweise zur Anlage mit einem mit der Sperreinrichtung verbundenen Fixierelement zum Fixieren der Sperreinrichtung in dem Wählhebelgehäuse vorgesehen. Bei dem Fixierelement kann es sich beispielsweise um ein stirnseitig an der Sperreinrichtung angeordnetes Fixierplattenelement handeln, welches in einem aufgenommen Zustand der Sperreinrichtung in dem Wählhebelgehäuse flächenseitig und/oder randseitig an dem wenigstens einen Halteelement anliegt. Dadurch kann eine größere Anlagefläche für das Wählhebelgehäuse bereitgestellt werden, wodurch eine verbesserte Schwingungsstabilität des Wählhebelgehäuses erreichbar ist.

Das Wählhebelgehäuse weist vorzugsweise wenigstens einen von einer Innenseite eines Wählhebelgehäuseteils abragenden Fixierpin zum Eingriff mit einer zugeordneten, mit der Sperreinrichtung, insbesondere dem Fixierplattenelement ausgebildeten Fixieröffnung auf. Dadurch kann zum einen die Sperreinrichtung zuverlässiger in dem Wählhebelgehäuse gehalten und zum anderen eine weitere Verbesserung der Schwingungsstabilität des betreffenden Wählhebelgehäuseteils erreicht werden.

Nach einer bevorzugten Ausführungsform weist wenigstens eines der Wählhebelgehäuseteile wenigstens eine Durchbrechung in einem als Schwingungsmembran identifizierten Wandungsbereich des Wählhebelgehäuses auf. Solche ein Wandungsbereich korrespondiert im Sinne der vorliegenden Erfindung zu einem Flächenbereich des Wählhebelgehäuses, in welchem keine Versteifungsrippen oder andere Elemente, die eine Stabilisierung der Wandungsfläche bewirken könnten, vorgesehen sind. Dadurch kann eine Membraneigenschaft des Wählhebelgehäuses weiter reduziert werden. Ferner kann das Wählhebelgehäuse durch Einsparung von Material kostengünstiger ausgestaltet werden.

Weiter bevorzugt ist die wenigstens eine Durchbrechung beabstandet zu Versteifungsrippen ausgeformt. Mit anderen Worten ist die wenigstens eine Durchbrechung von einer dazu benachbarten Versteifungsrippe über einen Wandungsabschnitt des Wählhebelgehäuses getrennt. Dadurch wird eine stabile Struktur des Wählhebelgehäuses im Bereich der Durchbrechungen und der dazu benachbarten Versteifungsrippen geschaffen.

Gemäß einem weiteren Aspekt der vorliegenden Erfindung wird ein verbessertes Kraftübertragungselement für eine Wählhebelvorrichtung vorgeschlagen, die ein wie vorbeschriebenes Wählhebelgehäuse umfasst. Das Kraftübertragungselement ist zur Übertragung einer mittels des Wählhebels auswählbaren Fahrstufe an eine Kraftfahrzeuggetriebevorrichtung geeignet. Das Kraftübertragungselement weist wenigstens ein Führungselement auf, das eingreifbar ist in ein mit der Wählhebelvorrichtung ausgebildetes Gegenführungselement zum Führen einer linearen Bewegung des Kraftübertragungselementes relativ zur Wählhebelvorrichtung. Das Führungselement sowie das Gegenführungselement können beispielsweise aus einem Nut-Feder-System ausgestaltet sein. Das Nut-Feder-System kann vorzugsweise dergestalt sein, dass die Nut aus einem Element ausgewählt aus Führungselement und Gegenführungselement und die Feder aus dem anderen Element ausgewählt aus Führungselement und Gegenführungselement ausgeformt ist. Alternativ dazu können sowohl das Führungselement als auch das Gegenführungselement eine Nut und eine Feder aufweisen, welche in die entsprechend zugeordnete Gegennut und Gegenfeder des jeweilig anderen Elementes zur linearen, insbesondere translatorischen Führung der Bewegung des Kraftübertragungselementes eingreifen können.

Das vorgeschlagene Kraftübertragungselement umfasst ferner eine Wählhebelaufnahme zur Aufnahme eines das Kraftübertragungselement zwangsbewegenden Wählhebels. Vorzugsweise ist die Wählhebelaufnahme zur Aufnahme eines zwischen einer Wählhebellagerungsstelle und eines freien Endes des Wählhebels angeordneten Wählhebelabschnitts geeignet. Dadurch kann das das Kraftübertragungselement durchragende freie Ende des Wählhebels für einen Eingriff mit einer Wählhebelführung verwendet werden.

Das Kraftübertragungselement umfasst des Weiteren eine Aufnahme für ein längsseitiges Ende einer zu einer Kraftfahrzeuggetriebevorrichtung führenden Kraftübertragungseinrichtung zur Übertragung der von dem Wählhebel ausgehenden Zwangsbewegung auf die Kraftübertragungseinrichtung. Die Kraftübertragungseinrichtung kann beispielsweise eine wie vorbeschriebene Kraftübertragungseinrichtung, insbesondere eine Seilzugeinrichtung, eine Bowdenzugeinrichtung oder ein mechanisches Gestänge sein. Mit anderen Worten ist die Aufnahme geeignet, ein längsseitiges Ende der Kraftübertragungseinrichtung relativ zu dem Kraftübertragungselement ortsfest zu halten. Die Aufnahme sowie die Wählhebelaufnahme sind über einen Rahmen miteinander verbunden, wobei der Rahmen das wenigstens eine Führungselement trägt. Vorzugsweise sind die Wählhebelaufnahme, die Aufnahme sowie der Rahmen einstückig ausgebildet, weiter bevorzugt aus einem kunststoffhaltigen Material. Das Kraftübertragungselement kann beispielsweise spritzgegossen sein, wodurch das Kraftübertragungselement kostengünstig und einfach herstellbar ist.

Der Rahmen weist zwischen der Wählhebelaufnahme und der Aufnahme für das längsseitige Ende eine Aussparung für eine Sperreinrichtung mit wenigstens einem schräg zur linearen Bewegung des Kraftübertragungselements beweglichen Sperrelement und wenigstens einem das bewegliche Sperrelement wenigstens teilweise umgebende Eingriffselement zum Eingriff in ein Wählhebelgehäuse der Wählhebelvorrichtung auf, wobei die Aussparung eine Bewegung des Rahmens relativ zu der Sperreinrichtung erlaubt. Eine solche Sperreinrichtung kann vorzugsweise ein elektromagnetischer Aktuator mit einem ein- und ausfahrbaren Pin sein. Die Aussparung weist eine solche Größe auf, dass das Kraftübertragungselement linear beweglich in Richtung der zwangsgeführten Bewegung durch den Wählhebel ist, ohne die Sperreinrichtung mitzuführen. Vorzugsweise weist die Aussparung eine solche Größe auf, dass das Kraftübertragungselement in Endpositionen, welche den Endpositionen des Wählhebels entsprechen, an der Sperreinrichtung oder an dem wenigstens einem Eingriffselement zur Anlage kommt und somit einen Endanschlag für das Kraftübertragungselement ausformt.

Der Rahmen weist des Weiteren wenigstens eine mit dem Sperrelement in Eingriff verbringbare Sperrausnehmung zur Sperrung der linearen Bewegung des Kraftübertragungselementes auf. Mit anderen Worten weist der Rahmen im Bereich der Aussparung in einer der Aussparung zugewandten Seite eine Ausnehmung oder einen Durchlass auf, welcher geeignet ist, mit dem Sperrelement in Eingriff gebracht werden zu können. Mittels des Eingriffs kann die lineare Bewegung des Kraftübertragungselementes gesperrt werden. Durch Ausbildung der Ausnehmung oder des Durchlasses an einer vorbestimmten Position, die vorzugsweise zu einer ausgewählten Fahrstufe entsprechende Wählhebelposition korrespondiert, kann der Wählhebel in dem Eingriffszustand des Sperrelementes mit der Ausnehmung oder dem Durchlass gesperrt werden. Vorzugsweise weist der Rahmen für jede auswählbare Fahrstufe eine Sperrausnehmung auf, um in einer jeweiligen ausgewählten Fahrstufe eine Sperrung des Kraftübertragungselementes beziehungsweise des Wählhebels bedarfsgerecht zu ermöglichen.

Das Kraftübertragungselement gemäß der vorliegenden Erfindung ermöglicht neben der ortsnahen Anordnung einer masseträchtigen Sperreinrichtung an der die Schwingung vom Motorraum übertragenen Kraftübertragungseinrichtung eine gleichzeitige Verbindung der Sperreinrichtung mit einem Wählhebelgehäuse, wodurch die masseträchtige Sperreinrichtung als Tilgermasse wirken kann. Dadurch lassen sich die Schwingungen und die übertragenen Störgeräusche weiter reduzieren.

Nach einem bevorzugten Ausführungsbeispiel der vorliegenden Erfindung ist die Wählhebelaufnahme sanduhrartig ausgebildet. Mit anderen Worten weist die Wählhebelaufnahme eine in Längsachsenrichtung des Wählhebels zwei gegenläufige trichterartige Ausnehmungen auf, wobei die Wählhebelaufnahme in einem Mittenbereich einen kleineren Durchmesser zur Aufnahme des Wählhebelabschnitts als in einem dazu außenliegenden Bereich der Wählhebelaufnahme aufweist. Weiter bevorzugt ist der Mittenbereich mit einem vorbestimmten Radius, mit anderen Worten querschnittlich kreissegmentartig in einem den Wählhebelabschnitt kontaktierenden Bereich ausgestaltet. Die sanduhrartige Ausbildung der Wählhebelaufnahme ermöglicht eine ständige Kontaktierung des Wählhebelabschnitts in jeder Bewegungslage desselbigen. Dies ist besonders vorteilhaft für eine wie vorbeschriebene kugelgelenk- oder kardanachsenartige Lagerung des Wählhebels.

Nach einem weiteren Aspekt der vorliegenden Erfindung wird eine Schaltvorrichtung für ein Kraftfahrzeuggetriebe vorgeschlagen, wobei die Schaltvorrichtung eine Wählhebelvorrichtung mit einem Wählhebel aufweist, der unmittelbar oder über ein Kraftübertragungselement, das mit dem Wählhebel zwangsbewegbar ist, mit einer Kraftübertragungseinrichtung zur Übertragung der Wählhebelbewegung an das Kraftfahrzeuggetriebe gekoppelt ist. Unmittelbar im Sinne dieser bevorzugten Ausführungsform bedeutet, dass der Wählhebel ohne Zwischenschaltung des Kraftübertragungselementes mit der Kraftübertragungseinrichtung gekoppelt ist. Die unmittelbare Kopplung des Wählhebels an die Kraftübertragungseinrichtung schließt dahingegen weitere zur Kopplung notwendige oder andere vorteilhafte Bauteile als das Kraftübertragungselement nicht aus, wodurch im Sinne der vorliegenden Erfindung weiterhin eine unmittelbare Kopplung des Wählhebels mit der Kraftübertragungseinrichtung vorliegt. Das Kraftübertragungselement, die Kraftübertragungseinrichtung und/oder die Wählhebelvorrichtung können eine wie vorbeschriebene Ausgestaltung aufweisen.

Die vorgeschlagene Schaltvorrichtung weist ferner eine erfindungsgemäße Befestigungseinrichtung, welche insbesondere eine wie vorbeschriebene Befestigungseinrichtung ist, zum Befestigen der Wählhebelvorrichtung an ein Kraftfahrzeugbauteil auf, wobei die Befestigungseinrichtung unter Zwischenlage eines Dichtmittels an dem Kraftfahrzeugbauteil befestigbar ist. Die Schaltvorrichtung zeichnet sich dadurch aus, dass die Befestigungseinrichtung auf einer dem Dichtmittel abgewandten Seite eine Halterung zum Halten eines Abschnitts der Kraftübertragungseinrichtung aufweist, wobei das Dichtmittel querschnittlich wenigstens teilweise überlappend mit einem von der Halterung begrenzten Haltebereich angeordnet ist. Dabei können die mit der vorgeschlagenen Befestigungseinrichtung beschriebenen bevorzugten Ausgestaltungen einzeln oder in ihrer Gesamtheit mit der vorgeschlagenen Schaltvorrichtung kombiniert werden. Damit kann eine Schaltvorrichtung bereitgestellt werden, welche gleichfalls die vom Motorraum übertragenen Schwingungen beziehungsweise Störgeräusch reduzieren kann.

Die Schaltvorrichtung kann alternativ oder zusätzlich zu der vorbeschriebenen Ausgestaltung das zwangsbewegbare Kraftübertragungselement aufweisen, wobei eine Sperreinrichtung zum Sperren des Wählhebels in einem Bewegungsweg des zwangsbewegbaren Kraftübertragungselementes zwischen der Kopplungsstelle mit der Kraftübertragungseinrichtung und einer Kopplungsstelle mit dem Wählhebel angeordnet ist, wobei die Sperreinrichtung mittels einer mit einem Wählhebelgehäuse der Wählhebelvorrichtung verbundenen Halteeinrichtung ortsfest gehalten ist. Die jeweiligen mit dieser vorgeschlagenen Schaltvorrichtung aufgeführten Bestandteile können eine wie vorbeschriebene Ausgestaltung einzeln oder in ihrer Gesamtheit aufweisen. Die alternative Schaltvorrichtung kann gleichfalls eine Reduzierung der vom Motorraum in den Kraftfahrzeuginnenraum übertragenen Schwingung und der damit einhergehenden Störgeräusche minimieren. Sofern die Schaltvorrichtung das zwangsbewegbare Kraftübertragungselement und die Sperreinrichtung zusätzlich aufweist, handelt es sich um eine bevorzugte Ausführungsform der eingangs vorgeschlagenen Schaltvorrichtung, wodurch eine weitere Verbesserung der Störgeräuschminimierung erreicht werden kann.

Gemäß einem weiteren Aspekt der vorliegenden Erfindung wird ein Verfahren zum Befestigen einer Schaltvorrichtung an ein Kraftfahrzeugbauteil vorgeschlagen. Das Verfahren zum Befestigen der Schaltvorrichtung umfasst einen Schritt des Befestigens einer Wählhebelvorrichtung an einer erfindungsgemäßen Befestigungseinrichtung und einen nachfolgenden Schritt des Befestigens der Befestigungseinrichtung an das Kraftfahrzeugbauteil unter Zwischenlage eines Dichtmittels. Die Wählhebelvorrichtung, die Befestigungseinrichtung sowie das Kraftfahrzeugbauteil können eine wie vorbeschriebene Ausgestaltung aufweisen.

Das Verfahren zeichnet sich dadurch aus, dass das Verfahren einen dem Befestigungsschritt der Wählhebelvorrichtung vorgelagerten Schritt des Montierens der Wählhebelvorrichtung umfasst, wobei der Montageschritt einen Schritt des Einsetzens eines mittels eines Wählhebels zwangsbewegbaren Kraftübertragungselementes mit einer im Bewegungsweg des Kraftübertragungselementes angeordneten Sperreinrichtung in ein Wählhebelgehäuseteil der Wählhebelvorrichtung, wobei die Sperreinrichtung wenigstens eine von dem Wählhebelgehäuseteil gehaltene Halteplatte umfasst, und einen anschließenden Schritt des Zusammensetzens des Wählhebelgehäuses umfasst. Hierbei können gleichfalls das Kraftübertragungselement sowie die Sperreinrichtung eine wie vorbeschriebene Ausgestaltung aufweisen. Mittels dieses vorgeschlagenen Verfahrens kann eine Schaltvorrichtung bereitgestellt werden, welche eine von einem Motorraum zu einem Kraftfahrzeuginnenraum übertragene Schwingung über eine Kraftübertragungseinrichtung minimieren kann.

Alternativ zu dem vorgeschlagenen Verfahren oder zusätzlich dazu zeichnet sich das Verfahren durch einen dem Befestigungsschritt der Befestigungseinrichtung vorgelagerten und dem Befestigungsschritt der Wählhebelvorrichtung nachgelagerten Schritt des Einbringens eines Dichtmittels zwischen Befestigungsvorrichtung und Wählhebelvorrichtung in einen Bereich, der querschnittlich wenigstens teilweise überlappt mit einem von einer Halterung begrenzten Haltebereich, wobei die Halterung zum Halten eines Abschnitts einer eine Wählhebelvorrichtung mit einem Kraftfahrzeuggetriebe schaltwirksam verbindenden Kraftübertragungseinrichtung auf einer dem Dichtmittel abgewandten Seite der Befestigungseinrichtung angeordnet ist. Die Kraftübertragungseinrichtung sowie das Hüllelement können eine wie vorbeschriebene Ausgestaltung aufweisen. Mittels dieses alternativen Verfahrens kann gleichfalls eine Schaltvorrichtung mit den vorbeschriebenen Vorteilen erreicht werden. Sofern die Anordnung des Dichtmittels wie vorbeschrieben zusätzlich erfolgt, handelt es sich um eine bevorzugte Ausführungsform des eingangs vorgeschlagenen Verfahrens.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert. Es zeigen:
- Fig. 1: eine perspektivische Ansicht einer Schaltvorrichtung nach einem bevorzugten Ausführungsbeispiel;
- Fig. 2: eine perspektivische Ansicht der in Fig. 1 gezeigten Schaltvorrichtung mit Einblick in ein Wählhebelgehäuse;
- Fig. 3: eine perspektivische Ausschnittsvergrößerung der in Fig. 1 gezeigten Schaltvorrichtung am Ort einer Halterung einer Kraftübertragungseinrichtung;
- Fig. 4: eine schematische Schnittansicht der in Fig. 3 gezeigten perspektivischen Ausschnittsvergrößerung entlang der Schnittlinie IV-IV;
- Fig. 5: eine perspektivische Seitenansicht der in Fig. 2 gezeigten Schaltvorrichtung;
- Fig. 6: eine perspektivische Seitenansicht der in Fig. 5 gezeigten Schaltvorrichtung ohne Befestigungseinrichtung und Kraftübertragungseinrichtung;
- Fig. 7: eine perspektivische Seitenansicht der in Fig. 6 gezeigten Schaltvorrichtung ohne Sperreinrichtung; und
- Fig. 8: ein Ablaufdiagramm eines Verfahrens zum Befestigen einer Schaltvorrichtung an ein Kraftfahrzeugbauteil nach einem bevorzugten Ausführungsbeispiel.

In der nachfolgenden Beschreibung bevorzugter Ausführungsbeispiele der vorliegenden Erfindung werden für die in den verschiedenen Figuren dargestellten und gleich oder ähnlich wirkenden Elemente gleiche oder ähnliche Bezugszeichen verwendet, wobei auf eine detaillierte wiederholte Beschreibung dieser Elemente verzichtet wird.

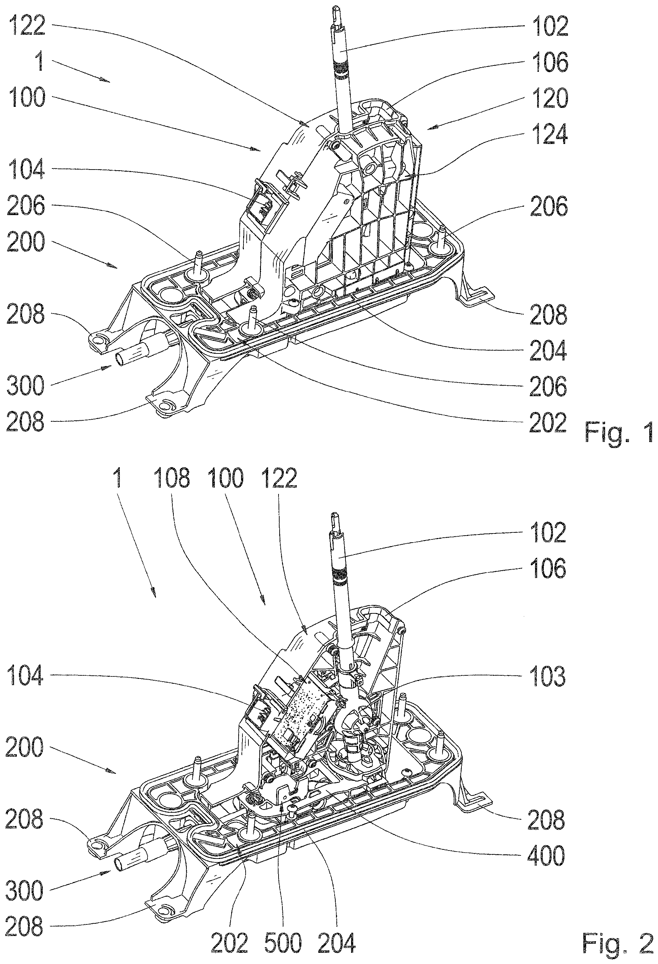

Fig. 1 zeigt eine perspektivische Ansicht einer Schaltvorrichtung 1 nach einem bevorzugten Ausführungsbeispiel. Die Schaltvorrichtung 1 umfasst eine Wählhebelvorrichtung 100 und eine die Wählhebelvorrichtung 100 aufnehmende Befestigungseinrichtung 200. Die Wählhebelvorrichtung 100 ist über eine Kraftübertragungseinrichtung 300, welche von der Befestigungseinrichtung 200 gehalten ist, mit einer nicht gezeigten Kraftfahrzeuggetriebevorrichtung schaltwirksam verbunden. Unter schaltwirksam im Sinne der vorliegenden Erfindung ist eine solche Verbindung zu verstehen, bei welcher durch Krafteinleitung in die Wählhebelvorrichtung 100 über einen Wählhebel 102 eine Kraftübertragung der eingeleiteten Kraft über die Kraftübertragungseinrichtung 300 derart stattfindet, dass in der Kraftfahrzeuggetriebevorrichtung eine solche Schaltbetätigung durchführbar ist, die zu der über den Wählhebel 102 ausgewählten Fahrstufe korrespondiert. Eine auswählbare Fahrstufe kann beispielsweise die in einem Automatikgetriebe beziehungsweise Automaten auswählbare Parkstellung P, Neutralstellung N, Rückwärtsfahrbetrieb R, Drive bzw. Vorwärtsfahrbetrieb D oder eine sonstige, die Kraftfahrzeuggetriebevorrichtung schaltende Fahrstufe sein. Anstelle des Wählhebels 102 kann gleichfalls eine über ein Tastenelement oder einen Drehsteller mögliche Auswahl einer Fahrstufe mittels Krafteinleitung von der Kraftübertragungseinrichtung 300 an die Kraftfahrzeuggetriebevorrichtung übermittelbar sein. Auch ist eine Kombination mit einem shift-by-wire-Prinzip denkbar, bei welcher eine Auswahl vorbestimmt auswählbarer Fahrstufen mittels eines elektrischen Signals und eine oder mehrere andere Fahrstufen mittels der Kraftübertragungseinrichtung 300 an die Kraftfahrzeuggetriebevorrichtung erfolgen kann. Beispielsweise kann eine Auswahl der Fahrstufen R, N und D mittels shift-by-wire an die Kraftfahrzeuggetriebevorrichtung übertragbar sein, wohingegen eine Auswahl der Fahrstufe P mittels der Kraftübertragungseinrichtung 300 erfolgt.

Die Wählhebelvorrichtung 100 umfasst ein Wählhebelgehäuse 120, welches aus zwei Wählhebelgehäusehälften 122, 124 zusammengesetzt ist. Eine Montageebene des Wählhebelgehäuses 120 ist kongruent mit einer Mittel- bzw. Symmetrieebene des Wählhebelgehäuses 120. Die erste Wählhebelgehäusehälfte 122 weist zu der zweiten Wählhebelgehäusehälfte 124 eine annähernd symmetrische Ausgestaltung auf. Die erste Wählhebelgehäusehälfte 122 unterscheidet sich im Wesentlichen von der zweiten Wählhebelgehäusehälfte 124 dadurch, dass mit der ersten Wählhebelgehäusehälfte 122 ein Durchlass für einen elektrischen Steckanschluss 104 beispielsweise zum Anschluss einer Fahrstufenanzeigevorrichtung sowie eine Schaltgasse 106 für den Wählhebel 102 ausgebildet ist. Die erste und zweite Wählhebelgehäusehälfte 122, 124 sind jeweils aus einem kunststoffhaltigen Material, beispielsweise mittels eines Mehrkomponenten-Spritzgussverfahrens, hergestellt.

Die Befestigungseinrichtung 200 ist wannenförmig aus einem kunststoffhaltigen Material, beispielsweise mittels eines Mehrkomponenten-Spritzgussverfahrens, ausgestaltet. Die Befestigungseinrichtung 200 weist auf einer der Wählhebelvorrichtung 100 zugewandten Seite einen Anlageflächenabschnitt 202 zur Anlage mit einem Anlageelement 600 wie ein Kraftfahrzeugbauteil oder Karosseriebauteil, bspw. ein Kraftfahrzeugbodenblech auf. Der Anlageflächenabschnitt 202 begrenzt einen Durchlass 201 zur Aufnahme der Wählhebelvorrichtung 100. Der Durchlass 201 ist im Bereich des wannenförmigen Abschnitts 220 ausgebildet. Die Wählhebelvorrichtung 100 ist mit einem Endabschnitt von der Befestigungseinrichtung 200 in dem Durchlass 201 aufgenommen, wobei der aufgenommene Endabschnitt der Wählhebelvorrichtung 100 ein freies Ende des Wählhebels 102 umschließt. In dem Anlageflächenabschnitt 202 ist ein Dichtmittel 204 angeordnet, wobei das Dichtmittel 204 parallel zu einem äußeren Rand der Befestigungseinrichtung 200 innerhalb der Anlagefläche 202 den Durchlass zur Aufnahme der Wählvorrichtung 100 vollständig umschließend verläuft. Das Dichtmittel 204 ist zur Anlage mit dem Anlageelement 600 vorgesehen, um ein die Befestigungseinrichtung 200 umgebenden Außenraum von einem die Wählhebelvorrichtung 100 umgebenden Innenraum wie ein Kraftfahrzeuginnenraum abzudichten.

In dem Anlageflächenabschnitt 202 sind ferner mehrere Befestigungsholme 206 angeordnet, welche durch das Anlageelement 600 durchragen und zur Befestigung einer die Wählhebelvorrichtung 100 umgebenden Verkleidung im Kraftfahrzeuginnenraum dienen. Die Befestigungseinrichtung 200 weist des Weiteren außerhalb des wannenförmigen Abschnitts 220, welcher zur Aufnahme der Wählhebelvorrichtung 100 dient, mehrere Befestigungselemente 208 zur Befestigung an dem Anlageelement 600 auf. Die Befestigung der Befestigungseinrichtung 200 kann mittels einer Schraubverbindung, Rastverbindung oder Klemmverbindung erfolgen, wobei die Befestigungselemente 208 entsprechend ausgebildet sind.

Fig. 2 zeigt eine perspektivische Ansicht der mit Fig. 1 gezeigten Schaltvorrichtung 1 in einem teilweise zerlegten Zustand der Wählhebelvorrichtung 100. Im Einzelnen zeigt Fig. 2 die Anordnung von weiteren Komponenten der Wählhebelvorrichtung 100 in dem Wählhebelgehäuse 120 wie eine mit dem Wählhebel 102 zusammenwirkende Elektronikeinheit 108, ein Wählhebelkugelgelenklager 103, ein Kraftübertragungselement 400 sowie eine Sperreinrichtung 500. Auf die die Erfindung betreffenden wesentlichen Merkmale wird im Folgenden mit den weiteren Figuren detaillierter eingegangen.

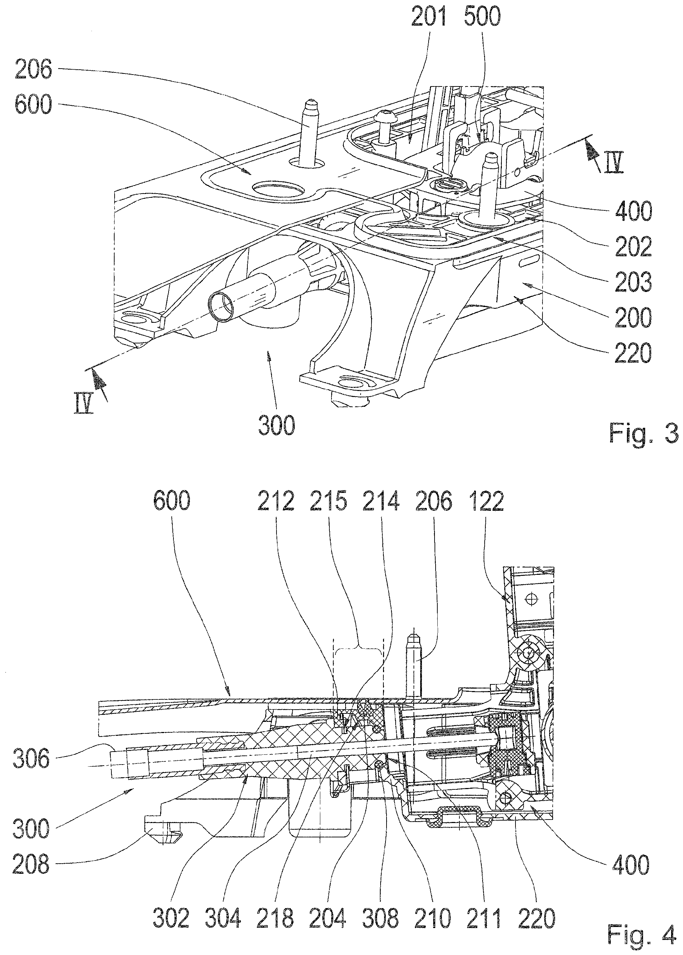

Fig. 3 zeigt einen perspektivische Ausschnittsvergrößerung der mit den Fig. 1 und 2 gezeigten Schaltvorrichtung 1 am Ort einer Halterung der Kraftübertragungseinrichtung 300. Fig. 4 zeigt eine Schnittansicht der in Fig. 3 gezeigten perspektivischen Ausschnittsvergrößerung entlang der Schnittlinie IV-IV. Wie im Besonderen in Fig. 3 dargestellt, weist der Anlageflächenabschnitt 202 eine Dichtmittelaufnahme 203 zur Aufnahme des Dichtmittels 204 auf. Die Dichtmittelaufnahme 203 ist mittels einer in dem Anlageflächenabschnitt 202 ausgebildeten Ausnehmung realisiert, wobei die Ausnehmung eine mittlere Rippe 205 zur Vergrößerung einer Oberfläche der Dichtmittelaufnahme 203 umfasst. Dadurch wird eine Haftwirkung des Dichtmittels 204 in der Dichtmittelaufnahme 203 verbessert.

Fig. 4 zeigt im Besonderen eine Halterung 210, 212, 214 der Kraftübertragungseinrichtung 300 an der Befestigungseinrichtung 200 sowie einen Verlauf der Dichtmittelaufnahme 203 bzw. des Dichtmittels 204 in einem von der Halterung 210, 212, 214 begrenzten Haltebereich 215 der Befestigungseinrichtung 200. Im Einzelnen ist die Kraftübertragungseinrichtung 300 in diesem bevorzugten Ausführungsbeispiel als Seilzugeinrichtung ausgebildet, wobei die Seilzugeinrichtung 300 an ihrem der Schaltvorrichtung 1 zugewandten längsseitigen Ende ein Hüllelement 302 in Form eines Seilzug-Widerlagers umfasst, das eine relativ zu dem Seilzug-Widerlager 302 bewegliche Seilzug-Seele 304 umhüllt und mit einem Seilzugmantel 306, der die Seilzug-Seele 304 in einem Bereich von der Schaltvorrichtung 1 bis zu der nicht dargestellten Kraftfahrzeuggetriebevorrichtung vollständig schützend umgibt, verbunden und mit dem selbigen fixiert ist.

Das Seilzug-Widerlager 302 ist von der Halterung 210, 212, 214, die ein erstes Halteelement 210 und ein zweites Halteelement 212 umfasst, ortsfest gehalten. Im Einzelnen ist das erste Halteelement 210 durch einen der Kraftübertragungseinrichtung 300 zugewandten Wandabschnittsbereich des wannenförmigen Abschnitts 220 ausgebildet, wobei der zugewandte Wandabschnittsbereich einen Haltedurchlass 211 umfasst, der ein stirnseitiges Ende des Seilzug-Widerlagers 302 kontaktierend aufnimmt. Das stirnseitige Ende des Seilzug-Widerlagers 302 ist von einem Dichtring umgeben, welcher an dem den Haltedurchlass 211 umgebenden Wandabschnittsbereich des wannenförmigen Abschnitts 220 der Befestigungseinrichtung 200 dichtend anliegt. Damit kann eine Abdichtung des die Befestigungseinrichtung 200 umgebenden Außenraums gegenüber dem Aufnahmeraum der Befestigungseinrichtung 200 gewährleistet werden.

In einem von dem Haltedurchlass 211 zu dem Anlageflächenabschnitt 202 weisenden Wandungsabschnittsbereichs des wannenförmigen Abschnitts 220 ist ein von dem wannenförmigen Abschnitt 220 nach Außen abragender Kragen 218 angeordnet, der einstückig mit der Befestigungseinrichtung 200 ausgeformt ist. Außen bzw. außenseitig im Sinne der vorliegenden Erfindung korrespondiert zu einem Bereich, der auf der dem Aufnahmedurchlass 201 abgewandten Seite der Befestigungseinrichtung 200 liegt. Der Kragen 218 weist auf einer dem Anlageelement 600 zugewandten Seite den Anlageflächenabschnitt 202 mit der Dichtmittelaufnahme 203 und dem darin aufgenommenen Dichtmittel 204 auf. Der Kragen 218 erstreckt sich weiter von seinem freien Ende, der zu dem ersten Halteelement 210 beabstandet ist, in entgegengesetzter Richtung zu seiner den Anlageflächenabschnitt 201 und die Dichtmittelaufnahme 203 aufweisenden Oberseite und parallel bzw. annähernd parallel zu der von dem Haltedurchlass 211 ausgebildeten Öffnungsebene. Der Kragen 218 weist in diesem Erstreckungsabschnitt eine Öffnung mit einer parallel bzw. annähernd parallel zu der Öffnungsebene des Haltedurchlasses 211 verlaufenden weiteren Öffnungsebene auf, durch welchen das stirnseitige Ende des Seilzug-Widerlagers 302 bis zu dem Haltedurchlass 211 hindurchragt. Annähernd parallel im Sinne der vorliegenden Erfindung korrespondiert zu einem Verlauf, der nicht exakt parallel zu einer Bezugslinie, Bezugsfläche oder Bezugsebene ist, wobei der Umfang der Abweichung zu der exakten Parallelität eine zulässige Toleranz zur Ausführung des gewünschten Effekts ausbildet. Für den konkreten Fall bedeutet dies, dass die weitere Öffnungsebene der Öffnung eine solche Abweichung in der Parallelität zu der Öffnungsebene des Haltedurchlasses 211 haben kann, die ein Einsetzen des Seilzug-Widerlagers 302 durch die Öffnung bis zu dem Haltedurchlass 211 erlaubt.

Der die Öffnung umfassende Erstreckungsabschnitt des Kragens 218 formt das zweite Halteelement 212 aus, wobei das erste Halteelement 210 und das zweite Halteelement 212 über den den Anlageflächenabschnitt 202 und die Dichtmittelaufnahme 203 umfassenden Abschnitt des Kragens 218 miteinander verbunden sind. Dabei definieren bzw. begrenzen die zu dem jeweilig anderen Halteelement 210, 212 abgewandten Außenseiten des ersten und zweiten Halteelementes 210, 212 einen in Richtung des ersten und zweiten Halteelementes 210, 212 verlaufenden Haltebereich 215. Der Haltebereich 215 weist in dieser Richtung ein Ausmaß auf, der einem geradlinigen Abstand zwischen den Außenseiten des ersten 210 und zweiten Halteelementes 212 entspricht.

Das Seilzug-Widerlager 302 weist zur Anlage mit dem zweiten Halteelement 212 einen entsprechend ausgestalteten Flanschabschnitt auf. Auf einer dem Flanschabschnitt abgewandten Seite des zweiten Haltelements 212 ist das Seilzug-Widerlager 302 mittels einer Klemme 214 ortsfest fixiert. Mit anderen Worten ist das Seilzug-Widerlager 302 mittels des ersten und zweiten Haltelements 210, 212 in Kraftwirkungsrichtung der Kraftübertragungseinrichtung 300 sowie schräg dazu an der Befestigungseinrichtung 200 fixiert, wodurch ein Kopplungspunkt zwischen Kraftübertragungseinrichtung 300 und der Befestigungseinrichtung 200 im Bereich der Halterung 210, 212, 214 ausgebildet wird.

Dieser Kopplungspunkt bildet gleichzeitig eine Übertragungsstelle für eine von einem Motorraum über die Kraftübertragungseinrichtung 300 übertragene Schwingung aus.

Dadurch, dass das Dichtmittel 204 vorzugsweise wenigstens teilweise überlappend mit dem von dem ersten Halteelement 210 und dem zweiten Halteelement 212 begrenzten Haltebereich 215, alternativ, wie in Fig. 4 dargestellt, besonders bevorzugt in Breitenrichtung des Dichtmittels 204 vollständig in dem Haltebereich 215 oder weiterhin alternativ den Haltebereich 215 vorzugsweise vollständig überlappend angeordnet ist, kann das Anlageelement 600 als Schwingungstilger zur Reduzierung der von der Kraftübertragungseinrichtung 300 übertragenen Schwingung unmittelbar am Kopplungspunkt wirken. Damit lassen sich Aggregatgeräusche in dem Kraftfahrzeuginnenraum merklich reduzieren.

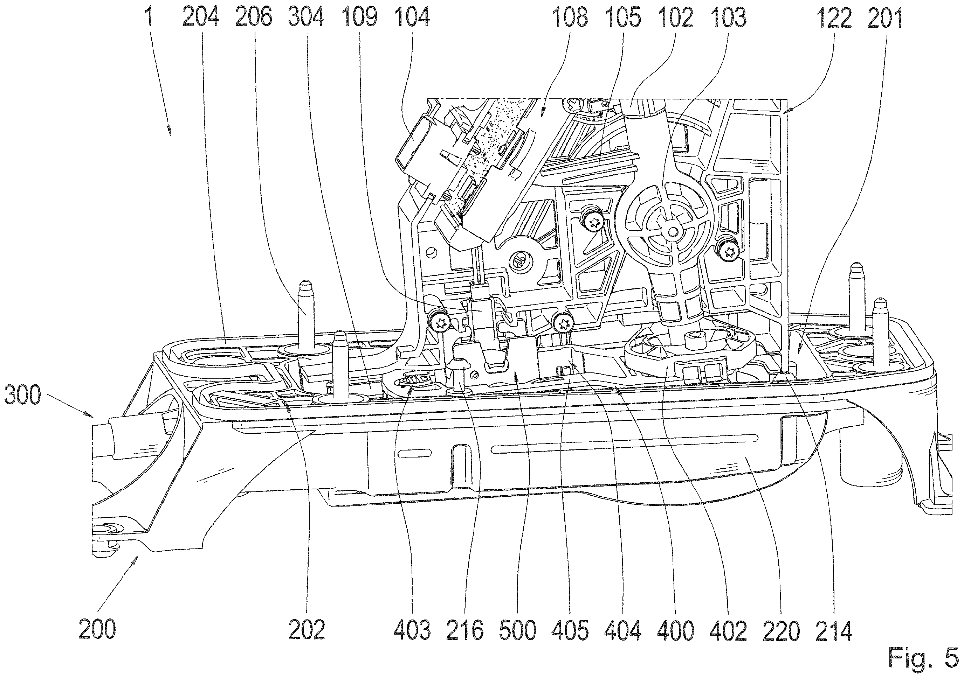

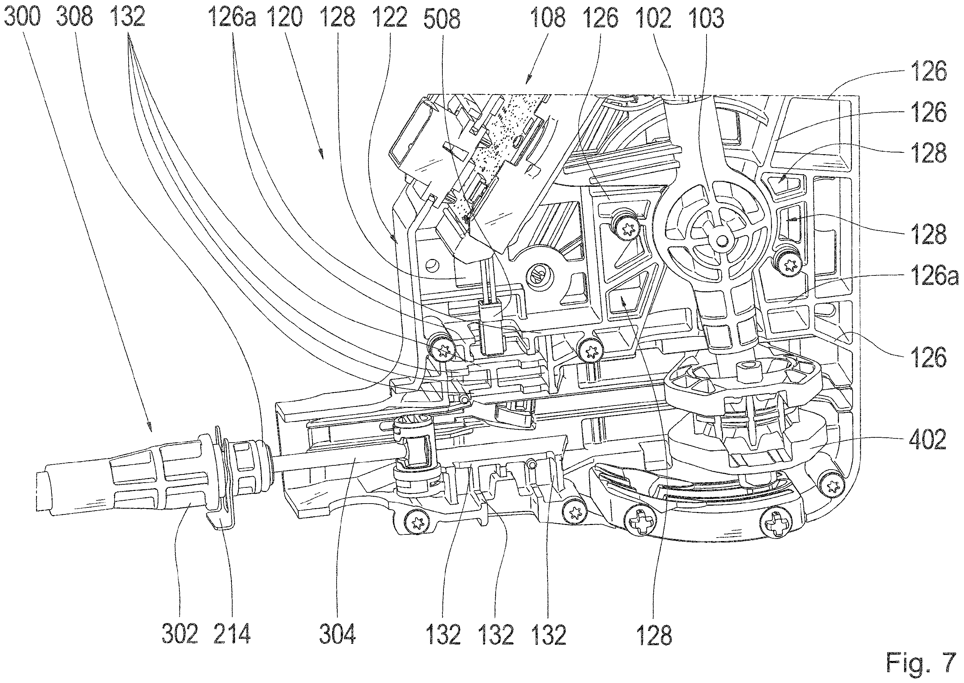

Fig. 5 bis 7 zeigen eine perspektivische Seitenansicht des mit Fig. 2 gezeigten bevorzugten Ausführungsbeispiels mit Details zu weiteren Maßnahmen zur Reduzierung einer von einem Motorraum in einen Kraftfahrzeuginnenraum mittels einer dazwischenliegenden Kraftübertragungseinrichtung übertragenen Schwingung.

Fig. 5 zeigt unter anderem die wannenförmige Ausgestaltung der Befestigungseinrichtung 200. Die Befestigungseinrichtung 200 weist darüber hinaus mehrere entlang des Anlageflächenabschnitts 202 angeordnete Schraubbefestigungen 216 zur Fixierung der Befestigungseinrichtung 200 an dem Anlageelement 600 auf.

Fig. 5 zeigt weiterhin die Anordnung des Kraftübertragungselements 400 in dem Wählhebelgehäuse 120 in einem Bereich des Aufnahmedurchlasses 201. Das Kraftübertragungselement 400 ist aus einem kunststoffhaltigen Material, beispielsweise mittels eines Mehrkomponenten-Spritzgussverfahrens hergestellt. Das Kraftübertragungselement 400 ist an einem Ende mit dem Wählhebel 102 zwangsgekoppelt. Dazu weist das Kraftübertragungselement 400 an dem einen Ende eine Wählhebelabschnittaufnahme auf, durch welche ein zwischen dem Kugelgelenklager 103 und einem in dem Wählhebelgehäuse 120 aufgenommenen freien Ende des Wählhebels 102 erstreckender Wählhebelabschnitt ragt. Dazu ist ein in dem einen Ende des Kraftübertragungselementes 400 angeordnetes Aufnahmeelement 402 vorgesehen, welches querschnittlich sanduhrartig ausgestaltet ist, um entsprechend der Bewegung des Wählhebels 102 eine lineare Zwangsbewegung des Kraftübertragungselementes 400 zu gewährleisten.

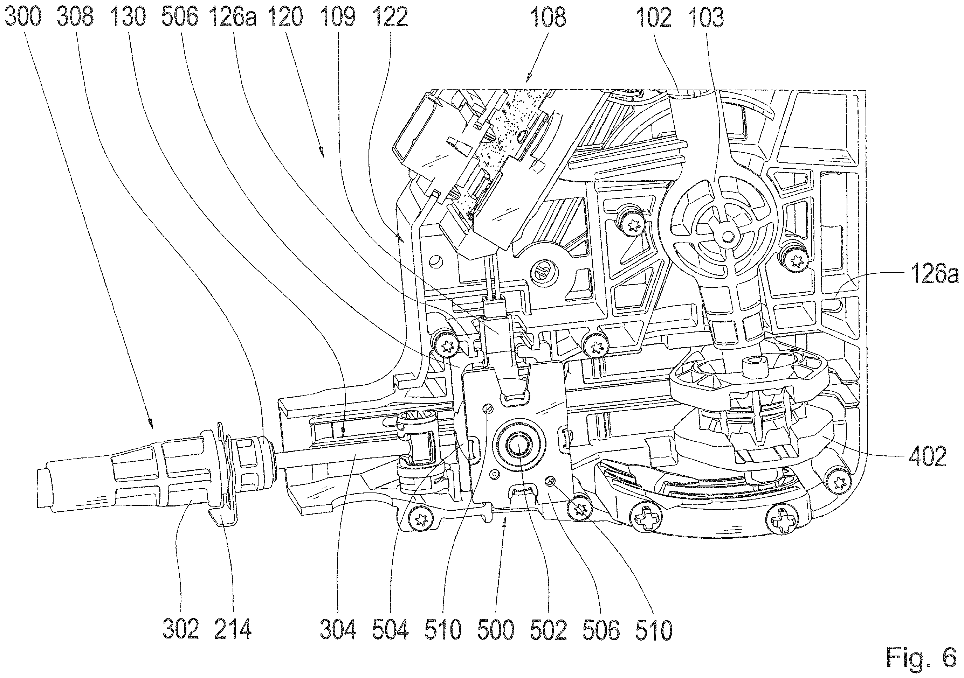

An dem anderen Ende des Kraftübertragungselementes 400, welches dem einen Ende gegenüberliegt, ist eine Aufnahme 403 zur Fixierung eines längsseitigen Endes der Seilzug-Seele 304 an dem Kraftübertragungselement 400 vorgesehen. Das Kraftübertragungselement 400 erstreckt sich von dem einen Ende mit dem Wählhebelaufnahmeelement 402 bis zu dem anderen Ende mit der Aufnahme 403 für das längsseitige Ende der Seilzug-Seele 304 rahmenartig mit dazwischenliegenden Aussparung 404 zur Aufnahme einer Sperreinrichtung 500. Die Aussparung 404 weist eine solche Größe auf, dass das Kraftübertragungselement 400 relativ zu der Sperreinrichtung 500, welche, wie nachfolgend detailliert beschrieben, ortsfest in dem Wählhebelgehäuse 120 gehalten ist, beweglich ist. Die Aussparung 404 ist ferner derart ausgestaltet, dass das Kraftübertragungselement 400 in jeweiligen Endpositionen des Wählhebels 102 zur Anlage mit der Sperreinrichtung 500 kommt, wodurch der die Aussparung 404 begrenzende Rahmen 405 des Kraftübertragungselementes 400 in Bewegungsrichtung einen Endanschlag in den jeweiligen Endpositionen des Wählhebels 102 definiert. Auf einer der Aussparung 404 abgewandten Seite des Kraftübertragungselements 400 weist der Rahmen 405 eine Führung in Form eines Nut-Feder-Systems zur verschieblichen Führung innerhalb des Wählhebelgehäuses 120 auf. Wie im Besonderen in Fig. 6 gezeigt, weist das Wählhebelgehäuse 120 bzw. die jeweiligen Wählhebelgehäusehälften 122, 124 ein in Kraftwirkungsrichtung der Kraftübertragungseinrichtung 300 verlaufendes Gegenführungselement 130 in Form einer Nut auf. Die Nut 130 greift in eine mit dem Kraftübertragungselement 400 ausgeformte, nicht dargestellte Feder zur gleitenden linearen Führung des Kraftübertragungselementes 400 innerhalb des Wählhebelgehäuses 120 ein. Mittels der Führung bzw. des Nut-Feder-Systems zwischen dem Kraftübertragungselement 400 und dem Wählhebelgehäuse 120 können durch entsprechende entlang der Führung vorgesehene Stopps Anschläge beziehungsweise Endanschläge für eine Wählhebelbewegung definiert werden.

Fig. 6 zeigt eine Anordnung der Sperreinrichtung 500 in dem Wählhebelgehäuse 120 nach einem bevorzugten Ausführungsbeispiel. Die Sperreinrichtung 500 ist ein elektromagnetischer Aktuator mit einem hülsenartigen Körper 504, der stirnseitig von Halteplatten 506 eingefasst ist. An einem der stirnseitigen Enden des hülsenartigen Körpers 504 der Sperreinrichtung 500 ist der ein- und ausfahrbare Sperrstift 502 angeordnet, der in Hülsenachsenrichtung ein- und ausfahrbar ist, wobei sich der Sperrstift 502 ungehindert durch einen Durchlass der stirnseitig angeordneten Halteplatte 506 hin und her bewegen kann. In Fig. 6 ist der Sperrstift 502 in einem eingefahrenen, einem nicht-aktivierten Zustand der Sperreinrichtung 500 dargestellt. Die Sperreinrichtung 500 weist eine elektrische Verbindung 109 zu der Elektronikeinheit 108 auf, wobei die Elektronikeinheit 108 ausgelegt ist, die Sperreinrichtung 500 bedarfsgerecht zu steuern. Mit anderen Worten wird der Sperrstift 502 mittels eines von der Elektronikeinheit 108 abgegebenen Schaltsignals ein- und ausgefahren. Der ausgefahrene Zustand des Sperrstifts 502 entspricht einem aktivierten Zustand der Sperreinrichtung 500, bei welchem eine Bewegung des Kraftübertragungselements 400 und damit des Wählhebels 102 gesperrt wird. Dazu weist der Rahmen 405 auf einer dem Sperrstift 502 gegenüberliegenden Seite wenigstens eine nicht dargestellte Sperrausnehmung auf, in welche der Sperrstift 502 im ausgefahrenen Zustand zur Sperrung einer Bewegung des Kraftübertragungselementes 400 eingreifen kann. Die wenigstens eine Sperrausnehmung ist an einer Position in dem Rahmen 405 vorgesehen, die einer zu sperrenden Wählhebelposition entspricht. Beispielsweise kann die Sperrausnehmung derart angeordnet sein, dass der Wählhebel 102 in einer eine ausgewählte Fahrstufe entsprechende Wählhebelposition mittels der Sperreinrichtung 500 gesperrt werden kann. Vorzugsweise sind für wenigstens zwei ausgewählte Fahrstufen entsprechende Wählhebelpositionen entsprechend zugeordnete Sperrausnehmungen in dem Rahmen 405 vorgesehen.

Jede der Halteplatten 506 ist von einer Wählhebelgehäusehälfte 122, 124 gehalten. Dazu weist jedes der Wählhebelgehäusehälften 122, 124 eine Halteeinrichtung 130 mit Halteelementen 132 auf, wobei die Halteelemente 132 bei diesem bevorzugten Ausführungsbeispiel aus Versteifungsrippen der jeweiligen Wählhebelgehäusehälfte 122, 124 ausgebildet sind. Im Einzelnen ist jede der Halteplatten 506 in der entsprechenden Wählhebelgehäusehälfte 122, 124 mittels der Halteelemente 132 klemmend gehalten. Dazu sind die als Halteelement 132 ausgeformten Versteifungsrippen derart in der jeweiligen Wählhebelgehäusehälfte 122, 124 angeordnet, dass diese an einem Außenumfang der jeweiligen Halteplatte 506 zur Anlage kommen, um die jeweilige Halteplatte 506 in wenigstens einer Richtung entlang der Halteplattenebene ortsfest zu fixieren. Dazu sind die Halteelemente 132 gegenüberliegend angeordnet. Die als Halteelement ausgeformten Versteifungsrippen 132 kommen dabei je nach Anordnungsort in der jeweiligen Wählhebelgehäusehälfte 122, 124 mit einem freien stirnseitigen Ende oder mit einer Seitenfläche mit der entsprechenden Halteplatte 506 zur Anlage. Zur weiteren Stabilisierung der jeweiligen Halteplatte 506 in der entsprechenden Wählhebelgehäusehälfte 122, 124 weist jede der Wählhebelgehäusehälften 122, 124 einen oder mehrere Haltestifte 134 auf, welche von einer Wählhebelgehäusehälfte-Innenseite der jeweiligen Wählhebelgehäusehälfte 122, 124 in Richtung der entsprechenden Halteplatte 506 abragen und in eine zugeordnete, mit der Halteplatte 506 ausgeformte Halteplattenausnehmung 510 eingreifen. Die Halteplattenausnehmungen 510 sind bei diesem bevorzugten Ausführungsbeispiel als Durchlässe in der Halteplatte 506 ausgeformt. Alternativ oder zusätzlich kann wenigstens eine Halteplattenausnehmung 510 als eine Vertiefung in der zugewandten Oberfläche der jeweiligen Halteplatte 506 zum Eingriff mit dem zugeordneten Haltestift 134 ausgebildet sein.

Die Anordnung der Sperreinrichtung 500 mit von den Wählhebelgehäusehälften 122, 124 gehaltenen Halteplatten 506 ermöglicht eine weitere Reduzierung der von dem Motorraum über die Kraftübertragungseinrichtung 300 an die Schaltvorrichtung 1 übertragene Schwingung. Im Einzelnen wirkt die masseträchtige Sperreinrichtung 500 durch die Anordnung im Bereich eines Endabschnitts der Kraftübertragungseinrichtung 300 in Verbindung mit der über die Halteplatten 506 erreichte Halterung in dem Wählhebelgehäuse 120 als Tilgermasse für die von der Kraftübertragungseinrichtung 300 übertragene Schwingung. In Ergänzung mit der vorbeschriebenen Anordnung eines Dichtmittels am Kopplungspunkt der Kraftübertragungseinrichtung 300 mit der Befestigungseinrichtung 200 und dem Anlageelement 600 lässt sich eine weitere Reduzierung der übertragenen Schwingung und somit eine Minimierung der Aggregatgeräusche in dem Kraftfahrzeuginnenraum erreichen.

Wie vorbeschrieben, zeigen Fig. 5 bis 7 ein bevorzugtes Ausführungsbeispiel eines Wählhebelgehäuses 120 umfassend eine erste Wählhebelgehäusehälfte 122 und eine zweite Wählhebelgehäusehälfte 124. Jede der Wählhebelgehäusehälften 122, 124 weist auf einer Wählhebelgehäusehälfte-Innenseite eine Mehrzahl an Versteifungsrippen 126 auf. Die Versteifungsrippen 126 ragen zueinander mit einer unterschiedlichen Höhe von der jeweiligen Wählhebelgehäusehälfte-Innenseite ab und formen so unterschiedliche Aufnahmeräume für entsprechende Komponenten der Schaltvorrichtung 1 aus. Beispielsweise wird mittels der Versteifungsrippen 126 ein Aufnahmeraum für das Kraftübertragungselement 400, welches an die Kraftübertragungseinrichtung 300 sowie an den Wählhebel 102 gekoppelt ist und die Sperreinrichtung 500 aufnimmt, geschaffen. Dazu ist eine zentrale Versteifungsrippe 126a vorgesehen, welche sich parallel oder annähernd parallel zu der Bewegungsrichtung des Kraftübertragungselementes 400 von einer Wählhebelgehäuseseite des Wählhebelgehäuses 120 zu einer gegenüberliegenden Wählhebelgehäuseseite erstreckt, wobei die zentrale Versteifungsrippe 126a lediglich Ausnehmungen beziehungsweise Durchlässe zum Durchlass der elektrischen Verbindung 109 sowie des zu dem Kraftübertragungselement 400 reichenden Wählhebelabschnitt des Wählhebels 102 aufweist. Der Anordnungsort der zentralen Versteifungsrippe 126a ist derart gewählt, dass zum Halten der Halteplatte 506 Halteelemente 132 vorsehbar sind, die vorzugsweise gleichfalls eine Versteifungsrippe ausbilden und mit der zentralen Versteifungsrippe 126a verbunden ist. Bei diesem bevorzugten Ausführungsbeispiel ist die zentrale Versteifungsrippe 126a mit der das Halteelement 132 ausformende Versteifungsrippe einstückig mit der ersten Wählhebelgehäusehälfte 122 ausgeformt. In diesem Zusammenhang ist anzumerken, dass die mit der zweiten Wählhebelgehäusehälfte 124 ausgeformte zentrale Versteifungsrippe 126a an einer eine Stirnseite der zentralen Versteifungsrippe 126a der ersten Wählhebelgehäusehälfte 122 kontaktierende Position ausgebildet ist, wobei in der zweiten Wählhebelgehäusehälfte 124 nicht zwangsläufig eine Aussparung für die elektrische Verbindung 109 vorzusehen ist. Zur kostengünstigeren Herstellung der ersten und zweiten Wählhebelgehäusehälfte 122, 124 ist es jedoch bevorzugt, die erste und zweite Wählhebelgehäusehälfte 122, 124 symmetrisch auszubilden, da dafür lediglich ein Werkzeug bereitzustellen ist.

Die Ausgestaltung der ersten und zweiten Wählhebelgehäusehälfte 122, 124 mit mehreren Versteifungsrippen 126 birgt den Vorteil, dass die ansonsten als Membran wirkende Fläche der jeweiligen ersten und zweiten Wählhebelgehäusehälfte 122, 124 in der Stabilität gefestigt und dadurch in ihrer Membraneigenschaft geschwächt wird. Dadurch lassen sich die übertragenen Schwingungen beziehungsweise Aggregatgeräusche in dem Kraftfahrzeuginnenraum weiter minimieren.

Zur weiteren Schwächung der Membraneigenschaft der jeweiligen ersten und zweiten Wählhebelgehäusehälfte 122, 124 weist jede der ersten und zweiten Wählhebelgehäusehälfte 122, 124 eine oder mehrere Durchbrechungen 128 auf. Jede der Durchbrechungen 128 ist derart ausgestaltet, dass ein die Durchbrechung 128 umgebender Rand zu einer benachbart liegenden Versteifungsrippe 126 beabstandet ist. Mit anderen Worten grenzt keine der Versteifungsrippen 126 unmittelbar an eine Durchbrechung 128 derart an, dass eine Seitenfläche der Versteifungsrippe 126 einen die Durchbrechung 128 begrenzenden Rand ausformt. Dies erhöht ferner die Stabilität der jeweiligen ersten und zweiten Wählhebelgehäusehälfte 122, 124 und wirkt sich zudem positiv auf die Schwächung der Membraneigenschaft der jeweiligen ersten und zweiten Wählhebelgehäusehälfte 122, 124 aus.

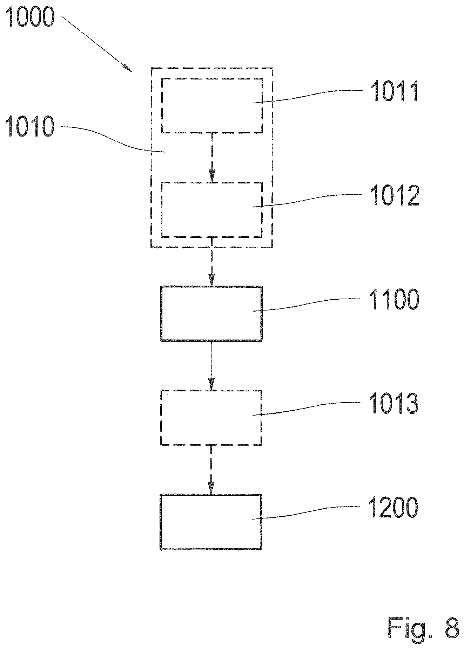

Fig. 8 zeigt ein Ablaufdiagramm eines Verfahrens 1000 zum Befestigen einer Schaltvorrichtung an ein Kraftfahrzeugbauteil nach einem ersten und zweiten bevorzugten Ausführungsbeispiel. Nach dem ersten Ausführungsbeispiel umfasst das Verfahren 1000 einen Schritt 1100 des Befestigens einer Wählhebelvorrichtung an einer Befestigungseinrichtung und einen nachfolgenden Schritt 1200 des Befestigens der Befestigungseinrichtung an das Kraftfahrzeugbauteil unter Zwischenlage eines Dichtmittels. Bei der Wählhebelvorrichtung, der Befestigungseinrichtung, des Kraftfahrzeugbauteils sowie des Dichtmittels handelt es sich in bevorzugter Weise um die entsprechend vorbeschriebenen Komponenten gemäß dem bevorzugten Ausführungsbeispiel. Das Verfahren 1000 zeichnet sich dadurch aus, dass das Verfahren einen dem Befestigungsschritt 1200 der Befestigungseinrichtung vorgelagerten Schritt 1013 des Einbringens eines Dichtmittels zwischen Befestigungseinrichtung und Wählhebelvorrichtung in einen Bereich umfasst, der querschnittlich wenigstens teilweise überlappt mit einem von einer Halterung begrenzten Haltebereich, wobei die Halterung zum Halten eines Abschnitts einer die Wählhebelvorrichtung mit einem Kraftfahrzeuggetriebe schaltwirksam verbindenden Kraftübertragungseinrichtung auf einer dem Dichtmittel abgewandten Seite der Befestigungseinrichtung angeordnet ist.

Nach dem zweiten bevorzugten Ausführungsbeispiel weist das Verfahren 1000 den vorgenannten Verfahrensschritt 1100 des Befestigens einer Wählhebelvorrichtung an einer Befestigungseinrichtung sowie den diesem nachfolgenden Verfahrensschritt 1200 des Befestigens der Befestigungseinrichtung an das Kraftfahrzeugbauteil unter Zwischenlage eines Dichtmittels auf, wobei das Verfahren 1000 einen dem Befestigungsschritt 1100 der Wählhebelvorrichtung vorgelagerten Schritt 1010 des Montierens der Wählhebelvorrichtung umfasst, wobei der Montageschritt 1010 einen Schritt 1011 des Einsetzens eines über einen Wählhebel zwangsbewegten Kraftübertragungselements mit einer im Bewegungsweg des Kraftübertragungselementes angeordneten Sperreinrichtung in ein Wählhebelgehäuseteil der Wählhebelvorrichtung, wobei die Sperreinrichtung wenigstens eine von dem Wählhebelgehäuseteil gehaltene Halteplatte umfasst, und einen nachfolgenden Schritt 1012 des Zusammensetzens des Wählhebelgehäuses umfasst. Bei den vorgenannten Komponenten handelt es sich bevorzugt um eine entsprechend vorbeschriebene Komponente nach dem bevorzugten Ausführungsbeispiel. Mittels dieses Verfahrens lässt sich gleichfalls eine Reduzierung der Schwingungsübertragung von dem Motorraum zu der Schaltvorrichtung in einen Kraftfahrzeuginnenraum beziehungsweise eine Minimierung der in dem Kraftfahrzeuginnenraum auftretenden Aggregatgeräusche aus dem Motorraum erreichen. Um eine Schwingungsminimierung beziehungsweise Reduzierung der Aggregatgeräusche weiter zu verbessern, können die Verfahren nach dem ersten und zweiten bevorzugten Ausführungsbeispiel zu einem Verfahren zusammengefasst werden.

Die beschriebenen und in den Figuren gezeigten Ausführungsbeispiele sind nur beispielhaft gewählt. Unterschiedliche Ausführungsbeispiele können vollständig und in Bezug auf einzelne Merkmale miteinander kombiniert werden. Auch kann ein Ausführungsbeispiel durch ein oder mehrere Merkmale eines weiteren Ausführungsbeispiels ergänzt werden. Die Abmessungen der geometrischen Form der beschriebenen Elemente sind nur beispielhaft und können entsprechend angepasst werden.

### Bezugszeichen

- 1: Schaltvorrichtung
- 100: Wählhebelvorrichtung
- 102: Wählhebel
- 103: Kugelgelenklager
- 104: elektrischer Steckanschluss
- 106: Schaltgasse
- 108: Elektronikeinheit
- 109: elektrische Verbindung
- 120: Wählhebelgehäuse
- 122: erste Wählhebelgehäusehälfte
- 124: zweite Wählhebelgehäusehälfte
- 126: Versteifungsrippe
- 128: Durchbrechung
- 130: Halteeinrichtung
- 132: Halteelement
- 134: Haltestift
- 200: Befestigungseinrichtung
- 201: Aufnahmedurchlass
- 202: Anlageflächenabschnitt
- 203: Dichtmittelaufnahme
- 204: Dichtmittel
- 205: Dichtmittelaufnahmerippe
- 206: Befestigungsholm
- 208: Befestigungselement
- 210: erstes Halteelement
- 211: Haltedurchlass
- 212: zweites Halteelement
- 214: Klemme
- 215: Haltebereich
- 216: Schraubbefestigung
- 218: Kragen
- 220: wannenförmiger Abschnitt
- 300: Kraftübertragungseinrichtung
- 302: Seilzug-Widerlager
- 304: Seilzug-Seele
- 306: Seilzug-Mantel
- 308: Dichtring
- 400: Kraftübertragungselement
- 402: Aufnahmeelement
- 404: Aussparung
- 405: Rahmen
- 500: Sperreinrichtung
- 502: Sperrstift
- 504: hülsenartige Sperrkörper
- 506: Halteplatte
- 510: Halteplattenausnehmung
- 600: Anlageelement
- 1000: Verfahren
- 1010: Montageschritt
- 1011: Einsetzschritt
- 1012: Schritt des Zusammensetzens
- 1013: Einbringschritt
- 1100: erster Befestigungsschritt
- 1200: zweiter Befestigungsschritt

## Patentansprüche

1. Befestigungseinrichtung (200) für eine Wählhebelvorrichtung (100) umfassend einen Durchlass (201) zur Aufnahme der Wählhebelvorrichtung (100),
einen den Durchlass (201) wenigstens teilweise umgebenden Anlageflächenabschnitt (202) zur Anlage an ein Anlageelement (600),
eine in dem Anlageflächenabschnitt (202) angeordnete Dichtmittelaufnahme (203), und
eine Halterung (210, 212, 214) zum Halten eines Abschnitts (302) einer Kraftübertragungseinrichtung (300), mittels welcher die Wählhebelvorrichtung (100) mit einer Kraftfahrzeuggetriebevorrichtung schaltwirksam verbindbar ist, wobei die Halterung (210, 212, 214) auf einer der Dichtmittelaufnahme (203) abgewandten Seite des Anlageflächenabschnitts (202) angeordnet ist,
wobei
die Dichtmittelaufnahme (203) querschnittlich wenigstens teilweise überlappend mit einem von der Halterung (210, 212, 214) begrenzten Haltebereich (215) angeordnet ist, **dadurch gekennzeichnet, dass** die Dichtmittelaufnahme (203) durch eine in dem Anlageflächenabschnitt (202) ausgebildete Aussparung ausgebildet ist.

2. Befestigungseinrichtung (200) nach Anspruch 1, **dadurch gekennzeichnet, dass** die Halterung (210, 212, 214) durch wenigstens zwei in Kraftwirkungsrichtung der Kraftübertragungseinrichtung (300) voneinander beabstandete Halterungsabschnitte (210, 212) ausgebildet ist.

3. Befestigungseinrichtung (200) nach Anspruch 2, **gekennzeichnet durch** wenigstens einen Kragen, der einen Teil des Anlageflächenabschnitts (202) mit der Dichtmittelaufnahme (203) auf einer Kragenseite umfasst oder ausbildet und wenigstens einen der Halterungsabschnitte (210, 212) auf einer dazu abgewandten Kragenseite trägt.

4. Befestigungseinrichtung (200) nach einem der vorherigen Ansprüche, **dadurch gekennzeichnet, dass** die Befestigungseinrichtung (200) aus einer Kunststoff-Hartkomponente und einer Kunststoff-Weichkomponente besteht, wobei wenigstens die Halterung (210, 212, 214) aus der Kunststoff-Weichkomponente besteht.

5. Wählhebelgehäuse (120) für eine Wählhebelvorrichtung (100) umfassend eine Befestigungseinrichtung (200) nach einem der Ansprüche 1 bis 4, ein erstes Wählhebelgehäuseteil (122) und ein zweites Wählhebelgehäuseteil (124), das mit dem ersten Wählhebelgehäuseteil (122) verbindbar ist, wobei wenigstens das erste (122) oder das zweite Wählhebelgehäuseteil (124) Versteifungsrippen (126, 126a) aufweist, welche einen Aufnahmeraum zur Aufnahme eines linear beweglichen Kraftübertragungselementes (400) zur Übertragung einer Wählhebelbewegung auf eine mit einer Kraftfahrzeuggetriebevorrichtung verbundene Kraftübertragungseinrichtung (300) von dem übrigen Wählhebelgehäusebereich abgrenzen, **gekennzeichnet durch**
eine Halteeinrichtung (132) zum ortsfesten Halten einer in dem Wählhebelgehäuse (120) in einem Bewegungsweg des Kraftübertragungselements (400) anordbaren Sperreinrichtung (500), welche zum Sperren einer linearen Bewegung des Kraftübertragungselementes (400) vorgesehen ist, wobei die Halteeinrichtung wenigstens ein Halteelement (132) aufweist, das mit wenigstens einer der Versteifungsrippen (126a) zur Anlage an der Sperreinrichtung (500) verbunden ist.

6. Wählhebelgehäuse (120) nach Anspruch 5, **dadurch gekennzeichnet, dass** die Halteeinrichtung wenigstens ein zweites Halteelement (132) aufweist, das dem wenigstens ersten Halteelement (132) gegenüberliegend angeordnet ist, wobei das erste und zweite Halteelement (132) ausgebildet sind, die Sperreinrichtung (500) unter Zwischenlage klemmend zu halten.

7. Wählhebelgehäuse (120) nach Anspruch 5 oder 6, **dadurch gekennzeichnet, dass** wenigstens das erste (122) oder das zweite Wählhebelgehäuseteil (124) wenigstens eine Durchbrechung (128) in einem als Schwingungsmembran identifizierten Wandungsbereich des Wählhebelgehäuses (120) umfasst.

8. Wählhebelgehäuse (120) nach Anspruch 7, **dadurch gekennzeichnet, dass** die wenigstens eine Durchbrechung (128) beabstandet zu den Versteifungsrippen (126, 126a) ausgeformt ist.

9. Kraftübertragungselement (400) für eine Wählhebelvorrichtung (100) umfassend ein Wählhebelgehäuse (120) nach einem der Ansprüche 5 bis 8, wenigstens ein Führungselement eingreifbar in ein mit der Wählhebelvorrichtung ausgebildetes Gegenführungselement (130) zum Führen einer linearen Bewegung des Kraftübertragungselementes (400) relativ zu der Wählhebelvorrichtung (100), eine Wählhebelaufnahme (402) zur Aufnahme eines Abschnitts eines das Kraftübertragungselement (400) zwangsbewegenden Wählhebels (102), und
eine Aufnahme (403) für ein längsseitiges Ende einer zu einer Kraftfahrzeuggetriebevorrichtung führenden Kraftübertragungseinrichtung (300) zur Übertragung der von dem Wählhebelabschnitt ausgehenden Zwangsbewegung auf die Kraftübertragungseinrichtung (400),
wobei die Wählhebelaufnahme (402) und die Aufnahme (403) für das längsseitige Ende über einen Rahmen (405) miteinander verbunden sind, wobei der Rahmen (405) das wenigstens eine Führungselement trägt,
**dadurch gekennzeichnet, dass**
der Rahmen (405) zwischen der Wählhebelaufnahme (402) und der Aufnahme (403) für das längsseitige Ende eine Aussparung (404) für eine Sperreinrichtung (500) mit wenigstens einem schräg zur linearen Bewegung des Kraftübertragungselements (400) beweglichen Sperrelement (502) und wenigstens einem das bewegliche Sperrelement (502) wenigstens teilweise umgebende Eingriffselement (506) zum Eingriff in ein Wählhebelgehäuse der Wählhebelvorrichtung aufweist, wobei die Aussparung (404) eine Bewegung des Rahmens (405) relativ zu der Sperreinrichtung (500) erlaubt, und wobei der Rahmen (405) wenigstens eine mit dem Sperrelement (502) in Eingriff verbringbare Sperrausnehmung zur Sperrung der linearen Bewegung des Kraftübertragungselementes (400) aufweist.

10. Schaltvorrichtung (1) für ein Kraftfahrzeuggetriebe umfassend
eine Wählhebelvorrichtung (100) mit einem Wählhebel (102), der unmittelbar oder über ein Kraftübertragungselement (400), das mit dem Wählhebel (102) zwangsbar ist, mit einer Kraftübertragungseinrichtung (300) zur Übertragung der Wählhebelbewegung an das Kraftfahrzeuggetriebe gekoppelt ist, und eine Befestigungseinrichtung (200) nach einem der Ansprüche 1 bis 4, zum Befestigen der Wählhebelvorrichtung (100) an ein Kraftfahrzeugbauteil (600), wobei die Befestigungseinrichtung (200) unter Zwischenlage eines Dichtmittels (204) an dem Kraftfahrzeugbauteil (600) befestigbar ist, **dadurch gekennzeichnet, dass**
die Befestigungseinrichtung (200) auf einer dem Dichtmittel (204) abgewandten Seite eine Halterung (210, 212, 214) zum Halten eines Abschnitts (302) der Kraftübertragungseinrichtung (300) aufweist, wobei das Dichtmittel (204) querschnittlich wenigstens teilweise überlappend mit einem von der Halterung (210, 212, 214) begrenzten Haltebereich (215) angeordnet ist, und/oder
das zwangsbewegbare Kraftübertragungselement (400) und eine Sperreinrichtung (500) zum Sperren des Wählhebels (102) in einem Bewegungsweg des zwangsbewegbaren Kraftübertragungselementes (400) zwischen der Kopplungsstelle mit der Kraftübertragungseinrichtung (300) und einer Kopplungsstelle mit dem Wählhebel (102) angeordnet ist, wobei die Sperreinrichtung (500) mittels einer mit einem Wählhebelgehäuse (120) der Wählhebelvorrichtung (100) verbundenen Halteeinrichtung (132) ortsfest gehalten ist.

11. Verfahren (1000) zum Befestigen einer Schaltvorrichtung an ein Kraftfahrzeugbauteil umfassend
einen Schritt (1100) des Befestigens einer Wählhebelvorrichtung an einer Befestigungseinrichtung (200) nach einem der Ansprüche 1 bis 4, und einen nachfolgenden Schritt (1200) des Befestigens der Befestigungseinrichtung an das Kraftfahrzeugbauteil unter Zwischenlage eines Dichtmittels,
**dadurch gekennzeichnet, dass**
das Verfahren einen dem Befestigungsschritt (1100) der Wählhebelvorrichtung vorgelagerten Schritt (1010) des Montierens der Wählhebelvorrichtung umfasst, wobei der Montageschritt einen Schritt (1011) des Einsetzens eines über einen Wählhebel zwangsbewegbaren Kraftübertragungselements mit einer im Bewegungsweg des Kraftübertragungselementes angeordneten Sperreinrichtung in ein Wählhebelgehäuseteil der Wählhebelvorrichtung, wobei die Sperreinrichtung wenigstens eine von dem Wählhebelgehäuseteil gehaltene Halteplatte umfasst, und einen nachfolgenden Schritt (1012) des Zusammensetzens des Wählhebelgehäuses umfasst, und/oder das Verfahren einen dem Befestigungsschritt (1200) der Befestigungseinrichtung vorgelagerten Schritt (1013) des Einbringens eines Dichtmittels zwischen Befestigungseinrichtung und Wählhebelvorrichtung in einen Bereich umfasst, der querschnittlich wenigstens teilweise überlappt mit einem von einer Halterung begrenzten Haltebereich, wobei die Halterung zum Halten eines Abschnitts einer eine Wählhebelvorrichtung mit einem Kraftfahrzeuggetriebe schaltwirksam verbindenden Kraftübertragungseinrichtung auf einer dem Dichtmittel abgewandten Seite der Befestigungseinrichtung angeordnet ist.

## Claims

1. Fastening device (200) for a selector lever apparatus (100) comprising
a passage (201) for receiving the selector lever apparatus (100),
a bearing face section (202) which surrounds the passage (201) at least partially for bearing against a bearing element (600),
a sealing means receptacle (203) which is arranged in the bearing face section (202),
a holder (210, 212, 214) for holding a section (302) of a force transmission device (300), by means of which the selector lever apparatus (100) can be connected in shifting terms to a motor vehicle transmission apparatus, the holder (210, 212, 214) being arranged on a side of the bearing face section (202), which side faces away from the sealing means receptacle (203),
the sealing means receptacle (203) being arranged so as to overlap at least partially in cross section with a holding region (215) which is delimited by the holder (210, 212, 214), **characterized in that** the sealing means receptacle (203) is configured by way of a cut-out which is configured in the bearing face section (202) .

2. Fastening device (200) according to Claim 1, **characterized in that** the holder (210, 212, 214) is configured by way of at least two holder sections (210, 212) which are spaced apart from one another in the direction of the action of force of the force transmission device (300).

3. Fastening device (200) according to Claim 2, **characterized by** at least one collar which comprises or configures a part of the bearing face section (202) with the sealing means receptacle (203) on one collar side and supports at least one of the holder sections (210, 212) on a collar side which faces away from the former collar side.

4. Fastening device (200) according to one of the preceding claims, **characterized in that** the fastening device (200) consists of a hard plastic component and a soft plastic component, at least the holder (210, 212, 214) consisting of the soft plastic component.

5. Selector lever housing (120) for a selector lever apparatus (100) comprising
a fastening device (200) according to one of Claims 1 to 4,
a first selector lever housing part (122) and a second selector lever housing part (124) which can be connected to the first selector lever housing part (122), at least the first (122) or the second selector lever housing part (124) having reinforcing ribs (126, 126a) which delimit from the remaining selector lever housing region a receiving space for receiving a linearly movable force transmission element (400) for the transmission of a selector lever movement to a force transmission device (300) which is connected to a motor vehicle transmission apparatus,
**characterized by**
a holding device (132) for stationary holding of a locking device (500) which can be arranged in the selector lever housing (120) in a movement path of the force transmission element (400) and is provided for locking a linear movement of the force transmission element (400), the holding device having at least one holding element (132) which is connected to at least one of the reinforcing ribs (126a) for bearing against the locking device (500).

6. Selector lever housing (120) according to Claim 5, **characterized in that** the holding device has at least one second holding element (132) which is arranged so as to lie opposite the at least one first holding element (132), the first and second holding element (132) being configured to hold the locking device (500) in a clamping manner in an intermediate position.

7. Selector lever housing (120) according to Claim 5 or 6, **characterized in that** at least the first (122) or the second selector lever housing part (124) comprises at least one aperture (128) in a wall region of the selector lever housing (120), which wall region is identified as an oscillating membrane.

8. Selector lever housing (120) according to Claim 7, **characterized in that** the at least one aperture (128) is formed spaced apart from the reinforcing ribs (126, 126a).

9. Force transmission element (400) for a selector lever apparatus (100) comprising
a selector lever housing (120) according to one of Claims 5 to 8,
at least one guide element which is capable of engaging into a corresponding guide element (130) which is configured with the selector lever apparatus in order to guide a linear movement of the force transmission element (400) relative to the selector lever apparatus (100),
a selector lever receptacle (402) for receiving a section of a selector lever (102) which positively moves the force transmission element (400), and
a receptacle (403) for a longitudinal-side end of a force transmission device (300) which leads to a motor vehicle transmission apparatus for the transmission of the positive movement which emanates from the selector lever section to the force transmission device (400),
the selector lever receptacle (402) and the receptacle (403) for the longitudinal-side end being connected to one another via a frame (405), the frame (405) supporting the at least one guide element,
**characterized in that**
the frame (405) has, between the selector lever receptacle (402) and the receptacle (403) for the longitudinal-side end, a cut-out (404) for a locking device (500) with at least one locking element (502) which can be moved obliquely with respect to the linear movement of the force transmission element (400), and with at least one engagement element (506) which surrounds the movable locking element (502) at least partially for the engagement into a selector lever housing of the selector lever apparatus, the cut-out (404) permitting a movement of the frame (405) relative to the locking device (500), and the frame (405) having at least one locking recess which can be brought into engagement with the locking element (502) in order to lock the linear movement of the force transmission element (400).

10. Shifting apparatus (1) for a motor vehicle transmission comprising
a selector lever apparatus (100) with a selector lever (102) which is coupled to a force transmission device (300) for the transmission of the selector lever movement to the motor vehicle transmission, directly or via a force transmission element (400) which can be positively with the selector lever (102), and
a fastening device (200) according to one of Claims 1 to 4, for fastening the selector lever apparatus (100) to a motor vehicle component (600), it being possible for the fastening device (200) to be fastened to the motor vehicle component (600) with a sealing means (204) being connected in between,
**characterized in that**,
on a side which faces away from the sealing means (204), the fastening device (200) has a holder (210, 212, 214) for holding a section (302) of the force transmission device (300), the sealing means (204) being arranged so as to overlap at least partially in cross section with a holding region (215) which is delimited by the holder (210, 212, 214), and/or
the positively movable force transmission element (400) and a locking device (500) for locking the selector lever (102) are arranged in a movement path of the positively movable force transmission element (400) between the coupling point to the force transmission device (300) and a coupling point to the selector lever (102), the locking device (500) being held in a stationary manner by means of a holding device (132) which is connected to a selector lever housing (120) of the selector lever apparatus (100).

11. Method (1000) for fastening a shifting apparatus to a motor vehicle component comprising
a step (1100) of fastening of a selector lever apparatus to a fastening device (200) according to one of Claims 1 to 4,
and
a following step (1200) of fastening of the fastening device to the motor vehicle component with a sealing means being connected in between,
**characterized in that**
the method comprises a step (1010) of assembling of the selector lever apparatus, which step (1010) is before the fastening step (1100) of the selector lever apparatus, the assembling step comprising a step (1011) of inserting of a force transmission element which can be positively moved via a selector lever with a locking device which is arranged in the movement path of the force transmission element into a selector lever housing part of the selector lever apparatus, the locking device comprising at least one holding plate which is held by the selector lever housing part, and a following step (1012) of connecting together of the selector lever housing, and/or
the method comprises a step (1013) of introducing of a sealing means into a region between the fastening device and the selector lever apparatus, which step (1013) is before the fastening step (1200) of the fastening device, which region overlaps at least partially in cross section with a holding region which is delimited by a holder, the holder for holding a section of a force transmission device which connects a selector lever apparatus to a motor vehicle transmission in shifting terms being arranged on a side of the fastening device, which side faces away from the sealing means.

## Revendications

1. Système de fixation (200) pour un dispositif de levier de sélection (100) comprenant
un passage (201) pour recevoir le dispositif de levier de sélection (100),
une portion de surface d'appui (202), entourant au moins en partie le passage (201), destinée à s'appliquer contre un élément d'appui (600),
un logement d'agent d'étanchéité (203) disposé dans la portion de surface d'appui (202), et
une fixation (210, 212, 214) pour retenir une portion (302) d'un système de transfert de force (300) au moyen duquel le dispositif de levier de sélection (100) peut être connecté, avec commutation active, à un dispositif de transmission de véhicule automobile, la fixation (210, 212, 214) étant disposée sur un côté de la portion de surface d'appui (202) opposé au logement d'agent d'étanchéité (203),
le logement d'agent d'étanchéité (203) étant disposé en section transversale de manière à chevaucher au moins en partie une région de retenue (215) limitée par la fixation (210, 212, 214), **caractérisé en ce que** le logement d'agent d'étanchéité (203) est réalisé par un évidement pratiqué dans la portion de surface d'appui (202).

2. Système de fixation (200) selon la revendication 1, **caractérisé en ce que** la fixation (210, 212, 214) est réalisée par au moins deux portions de fixation (210, 212) espacées l'une de l'autre dans la direction d'action de force du système de transfert de force (300).

3. Système de fixation (200) selon la revendication 2, **caractérisé par** au moins un collet qui comprend ou constitue une partie de la portion de surface d'appui (202) avec le logement d'agent d'étanchéité (203) sur un côté du collet et qui porte au moins l'une des portions de fixation (210, 212) sur un côté du collet opposé à celui-ci.

4. Système de fixation (200) selon l'une quelconque des revendications précédentes, **caractérisé en ce que** le système de fixation (200) est constitué d'un composant dur en plastique et d'un composant mou en plastique, au moins la fixation (210, 212, 214) étant constituée du composant mou en plastique.

5. Boîtier de levier de sélection (120) pour un dispositif de levier de sélection (100) comprenant un système de fixation (200) selon l'une quelconque des revendications 1 à 4,
une première partie de boîtier de levier de sélection (122) et une deuxième partie de boîtier de levier de sélection (124) qui peut être reliée à la première partie de boîtier de levier de sélection (122), au moins la première (122) ou la deuxième (124) partie de boîtier de levier de sélection présentant des nervures de renforcement (126, 126a) qui séparent du reste de la région de boîtier de levier de sélection un espace de réception pour recevoir un élément de transfert de force déplaçable linéairement (400) pour le transfert d'un mouvement du levier de sélection à un système de transfert de force (300) connecté au dispositif de transmission du véhicule automobile, **caractérisé par**
un système de retenue (132) pour retenir de manière fixée en position un système de blocage (500) pouvant être disposé dans le boîtier de levier de sélection (120) dans une trajectoire de déplacement de l'élément de transfert de force (400), lequel système de blocage est prévu pour bloquer un mouvement linéaire de l'élément de transfert de force (400), le système de retenue présentant au moins un élément de retenue (132) qui est connecté à au moins l'une des nervures de renforcement (126a) pour l'appui contre le système de blocage (500).

6. Boîtier de levier de sélection (120) selon la revendication 5, **caractérisé en ce que** le système de retenue présente au moins un deuxième élément de retenue (132) qui est disposé à l'opposé de l'au moins un premier élément de retenue (132), le premier et le deuxième élément de retenue (132) étant réalisés de manière à retenir le système de blocage (500) par serrage entre eux.

7. Boîtier de levier de sélection (120) selon la revendication 5 ou 6, **caractérisé en ce qu'**au moins la première (122) ou la deuxième (124) partie de boîtier de levier de sélection comprend au moins un orifice (128) dans une région de paroi du boîtier de levier de sélection (120) désignée par membrane oscillante.

8. Boîtier de levier de sélection (120) selon la revendication 7, **caractérisé en ce que** l'au moins un orifice (128) est formé à distance des nervures de renforcement (126, 126a).

9. Elément de transfert de force (400) pour un dispositif de levier de sélection (100) comprenant un boîtier de levier de sélection (120) selon l'une quelconque des revendications 5 à 8,
au moins un élément de guidage pouvant s'engager dans un élément de guidage conjugué (130) réalisé avec le dispositif de levier de sélection pour le guidage d'un mouvement linéaire de l'élément de transfert de force (400) par rapport au dispositif de levier de sélection (100),
un logement de levier de sélection (402) pour recevoir une portion d'un levier de sélection (102) déplaçant par force l'élément de transfert de force (400), et
un logement (403) pour une extrémité longitudinale d'un système de transfert de force (300) conduisant à un dispositif de transmission de véhicule automobile, pour le transfert du mouvement forcé provenant de la portion de levier de sélection au système de transfert de force (400),
le logement de levier de sélection (402) et le logement (403) pour l'extrémité longitudinale étant reliés l'un à l'autre par le biais d'un cadre (405), le cadre (405) portant l'au moins un élément de guidage,
**caractérisé en ce que**
le cadre (405) entre le logement de levier de sélection (402) et le logement (403) pour l'extrémité longitudinale présente un évidement (404) pour un système de blocage (500) avec au moins un élément de blocage (502) déplaçable obliquement par rapport au mouvement linéaire de l'élément de transfert de force (400) et au moins un élément d'engagement (506) entourant au moins en partie l'élément de blocage mobile (502) en vue de l'engagement dans un boîtier de levier de sélection du dispositif de levier de sélection, l'évidement (404) permettant un déplacement du cadre (405) par rapport au système de blocage (500), et le cadre (405) présentant au moins un évidement de blocage pouvant être amené en prise avec l'élément de blocage (502) pour le blocage du mouvement linéaire de l'élément de transfert de force (400).

10. Dispositif de commutation (1) pour une transmission de véhicule automobile, comprenant un dispositif de levier de sélection (100) avec un levier de sélection (102) qui est accouplé, directement ou par le biais d'un élément de transfert de force (400) qui peut être par force avec le levier de sélection (102), à un système de transfert de force (300) pour le transfert du mouvement du levier de sélection à la transmission de véhicule automobile, et
un système de fixation (200) selon l'une quelconque des revendications 1 à 4, pour la fixation du dispositif de levier de sélection (100) à un composant de véhicule automobile (600), le système de fixation (200) pouvant être fixé au composant de véhicule automobile (600) par interposition d'un agent d'étanchéité (204), **caractérisé en ce que**
le système de fixation (200) présente, sur un côté opposé à l'agent d'étanchéité (204), une fixation (210, 212, 214) pour retenir une portion (302) du système de transfert de force (300), l'agent d'étanchéité (204) étant disposé en section transversale de manière à chevaucher au moins en partie une région de retenue (215) limitée par la fixation (210, 212, 214), et/ou
l'élément de transfert de force déplaçable par force (400) et un système de blocage (500) pour le blocage du levier de sélection (102) sont disposés dans une trajectoire de déplacement de l'élément de transfert de force déplaçable par force (400) entre le point d'accouplement au système de transfert de force (300) et un point d'accouplement au levier de sélection (102), le système de blocage (500) étant retenu de manière fixée en position au moyen d'un système de retenue (132) connecté à un boîtier de levier de sélection (120) du dispositif de levier de sélection (100).

11. Procédé (1000) pour la fixation d'un dispositif de commutation à un composant de véhicule automobile, comprenant
une étape (1100) de fixation d'un dispositif de levier de sélection à un système de fixation (200) selon l'une quelconque des revendications 1 à 4,
et
une étape suivante (1200) de fixation du système de fixation au composant de véhicule automobile par interposition d'un agent d'étanchéité, **caractérisé en ce que**
le procédé comprend une étape (1010) de montage du dispositif de levier de sélection, effectuée avant l'étape de fixation (1100) du dispositif de levier de sélection, l'étape de montage comprenant une étape (1011) d'insertion d'un élément de transfert de force déplaçable par force par le biais d'un levier de sélection, avec un système de blocage disposé dans la voie de déplacement de l'élément de transfert de force, dans une partie de boîtier de levier de sélection du dispositif de levier de sélection, le système de blocage comprenant au moins une plaque de retenue qui est retenue par la partie de boîtier de levier de sélection, et une étape suivante (1012) d'assemblage du boîtier de levier de sélection, et/au
le procédé comprenant une étape (1013), effectuée avant l'étape de fixation (1200) du système de fixation, d'introduction d'un agent d'étanchéité entre le système de fixation et le dispositif de levier de sélection dans une région qui, en section transversale, chevauche au moins en partie une région de retenue limitée par une fixation, la fixation étant disposée de manière à retenir une portion d'un système de transfert de force reliant, avec commutation active, un dispositif de levier de sélection à une transmission de véhicule automobile, sur un côté du système de fixation opposé à l'agent d'étanchéité.
